(19) **Europäisches Patentamt / European Patent Office / Office européen des brevets**

(11) **EP 3 520 022 B1**

(12) # FASCICULE DE BREVET EUROPEEN

(45) Date de publication et mention de la délivrance du brevet:
**08.04.2026 Bulletin 2026/15**

(21) Numéro de dépôt: **17783940.4**

(22) Date de dépôt: **26.09.2017**

(51) Classification Internationale des Brevets (IPC):
**G01N 15/1434** *(2024.01)* **G03H 1/04** *(2006.01)*
**G03H 1/08** *(2006.01)* **G06V 20/69** *(2022.01)*
**G01N 15/1433** *(2024.01)* **G01N 15/10** *(2024.01)*
**G01N 15/14** *(2024.01)* **G01N 15/01** *(2024.01)*

(52) Classification Coopérative des Brevets (CPC):
**G03H 1/0866; G01N 15/1434; G03H 1/0443; G06V 20/693; G06V 20/698;** G01N 15/1433; G01N 2015/016; G01N 2015/1006; G01N 2015/1454; G01N 2015/1486; G03H 2001/0447; G03H 2001/0883

(86) Numéro de dépôt international:
**PCT/FR2017/052591**

(87) Numéro de publication internationale:
**WO 2018/060589 (05.04.2018 Gazette 2018/14)**

(54) **PROCÉDÉ DE NUMÉRATION DE LEUCOCYTES DANS UN ÉCHANTILLON**

VERFAHREN ZUR ZÄHLUNG VON LEUKOZYTEN IN EINER PROBE

METHOD FOR COUNTING WHITE BLOOD CELLS IN A SAMPLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.09.2016 FR 1659161**

(43) Date de publication de la demande:
**07.08.2019 Bulletin 2019/32**

(73) Titulaires:
• **Commissariat à l'Energie Atomique et aux Energies Alternatives**
**75015 Paris (FR)**
• **Horiba ABX SAS / Horiba Ltd**
**34184 Montpellier cedex 4 (FR)**
• **Université d'Aix-Marseille**
**13284 Marseille Cedex 07 (FR)**

(72) Inventeurs:
• **ALLIER, Cédric**
**38000 Grenoble (FR)**
• **HERVE, Lionel**
**38700 Corenc (FR)**
• **MOREL, Sophie**
**59500 Douai (FR)**
• **ISEBE, Damien**
**34790 Grabels (FR)**
• **DRANCOURT (PR.), Michel**
**13012 Marseille (FR)**
• **ALI CHERIF, Anais**
**34090 Montpelier (FR)**

(74) Mandataire: **INNOV-GROUP**
**209 Avenue Berthelot**
**69007 Lyon (FR)**

(56) Documents cités:
WO-A1-2015/015023      WO-A1-2016/151248
FR-A1- 3 034 196        US-A1- 2014 327 944

• **SEO SUNGKYU ET AL: "High-Throughput Lens-Free Blood Analysis on a Chip", ANALYTICAL CHEMISTRY, VOL.82, NO. 11, 5 July 2010 (2010-07-05), pages 4621 - 4626, XP093125509, Retrieved from the Internet <URL:https://pubs.acs.org/doi/10.1021/ac1007915> [retrieved on 20240130], DOI: 10.1021/ac1007915**

- JAVIDI BAHRAM ET AL: "Three-dimensional imaging and recognition of microorganism using single-exposure on-line (SEOL) digital holography References and links", J. OPT. SOC. AM. A. OPT. LETT. APPL. OPT. IEEE TRANS. ON AES. APPL. PHY. LETT. OPT. ENG. OPT. LETT. OPT. LETT. BIOLOGY OF THE PROKARYOTES REAL-TIME IMAGING OPT. ENG. J. OPT. SOC. AM. IEEE TRANS. ON PAMI, 1 January 1998 (1998-01-01), pages 2976 - 2985, XP055881280, Retrieved from the Internet <URL:https://www.osapublishing.org/DirectPDFAccess/A6B12A4E-B34B-49A6-B55 D2E9EFDD429D8_84327/oe-13-12-4492.pdf?da=1&id=84327&seq=0&mobile=no> [retrieved on 20220119]
- PATRIK LANGEHANENBERG ET AL: "Autofocusing in digital holographic microscopy", 3D RESEARCH, vol. 2, no. 1, 1 March 2011 (2011-03-01), XP055053319, DOI: 10.1007/3DRes.01(2011)4
- POHER V ET AL: "Lensfree in-line holographic detection of bacteria", ADVANCED MICROSCOPY TECHNIQUES II, SPIE, 1000 20TH ST. BELLINGHAM WA 98225-6705 USA, vol. 8086, no. 1, 9 June 2011 (2011-06-09), pages 1 - 7, XP060015100, DOI: 10.1117/12.889324
- NING WU ET AL: "Three-Dimensional Identification of Microorganisms Using a Digital Holographic Microscope", COMPUTATIONAL AND MATHEMATICAL METHODS IN MEDICINE, vol. 220, no. 4598, 1 January 2013 (2013-01-01), pages 671 - 6, XP055327282, ISSN: 1748-670X, DOI: 10.1155/2013/162105
- DENIS L ET AL: "Numerical suppression of the twin image in in-line holography of a volume of micro-objects; Numerical suppression of the twin image", MEASUREMENT SCIENCE AND TECHNOLOGY, IOP, BRISTOL, GB, vol. 19, no. 7, 1 July 2008 (2008-07-01), pages 74004, XP020136298, ISSN: 0957-0233

## Description

### DOMAINE TECHNIQUE

L'invention est un procédé optique pour l'analyse de particules contenues dans un échantillon. En particulier, l'invention permet la numération de cellules dans le liquide céphalorachidien. Une application visée est l'aide au diagnostic de la méningite.

### ART ANTERIEUR

L'analyse cytologique du liquide céphalo-rachidien constitue une étape importante dans le diagnostic de la méningite. Il est admis qu'une concentration d'au moins 10 leucocytes par $\mu l$, peut être la signature d'une méningite, en particulier d'une méningite bactérienne. Actuellement, une telle analyse est généralement effectuée au microscope, mais le champ d'observation est faible. Par conséquent, l'analyse d'un échantillon est longue, difficilement automatisable et nécessite un dispositif d'analyse coûteux ainsi que l'intervention d'un opérateur hautement qualifié. Par ailleurs, une telle analyse peut être opérateur dépendante.

Par ailleurs, l'observation d'échantillons, et en particulier des échantillons biologiques, par imagerie sans lentille connaît un développement important depuis ces dix dernières années. Cette technique permet d'observer un échantillon en le disposant entre une source de lumière et un capteur d'image, sans disposer de lentille de grossissement optique entre l'échantillon et le capteur d'image. Ainsi, le capteur d'image collecte une image de l'onde lumineuse transmise par l'échantillon. Cette image, également appelée hologramme, est formée de figures d'interférence entre l'onde lumineuse émise par la source de lumière et transmise par l'échantillon, et des ondes de diffraction, résultant de la diffraction par l'échantillon de l'onde lumineuse émise par la source de lumière. Ces figures d'interférences sont parfois dénommées figures de diffraction, ou désignées par le terme anglais « diffraction pattern ».

Le document WO2008090330 décrit un dispositif permettant l'observation d'échantillons biologiques, en l'occurrence des cellules, par imagerie sans lentille. Le dispositif permet d'associer, à chaque cellule, une figure d'interférence dont la morphologie permet d'identifier le type de cellule.

L'imagerie sans lentille apparaît alors comme une alternative simple, et peu onéreuse, à un microscope classique. De plus, elle permet d'acquérir des images dont le champ d'observation est nettement plus important que celui d'un microscope.

Le document US2014/0327944 décrit une méthode d'identification de particules, par exemple des particules sanguines, en analysant des hologrammes acquis par un capteur d'image, placé selon une configuration sans lentille. L'analyse d'un hologramme permet de générer des données, ces dernières étant comparées à une bibliothèque d'hologrammes simulés. Mais ce procédé se heurte aux mêmes limites, à savoir une mise en œuvre délicate lorsque la densité des particules est élevée.

L'hologramme acquis par le capteur d'image peut être traité par un algorithme de reconstruction holographique, de manière à estimer des propriétés optiques de l'échantillon, par exemple une absorption ou une valeur de déphasage de l'onde lumineuse incidente, émise par la source de lumière. De tels algorithmes sont bien connus dans le domaine de la reconstruction holographique. Pour cela, la distance entre l'échantillon et le capteur d'image étant connue, on applique un algorithme de propagation, prenant en compte cette distance, ainsi que la longueur d'onde de l'onde lumineuse incidente. On peut alors reconstituer une image d'une propriété optique de l'échantillon. L'image reconstruite peut, en particulier, être une image complexe de l'onde lumineuse transmise par l'échantillon, comportant des informations sur les propriétés optiques d'absorption ou de variation de phase de l'échantillon. Un exemple d'algorithme de reconstruction holographique est décrit dans la publication Ryle et al, « Digital in-line holography of biological specimens », Proc. Of SPIE Vol.6311 (2006).

Mais les algorithmes de reconstruction holographiques peuvent induire un bruit de reconstruction dans l'image reconstruite, désigné par le terme de « twin image ». Cela est essentiellement dû au fait que l'image formée sur le capteur d'image ne comporte pas d'information relative à la phase de l'onde lumineuse atteignant ce capteur. De ce fait, la reconstruction holographique s'effectue sur la base d'une information optique incomplète, basée uniquement sur l'intensité de l'onde lumineuse collectée sur le capteur d'image. L'amélioration de la qualité de la reconstruction holographique fait l'objet de nombreux développements, en mettant en œuvre des algorithmes fréquemment dénommés « Phase retrieval », permettant une estimation de la phase de l'onde lumineuse à laquelle le capteur d'image est exposé. Cependant, de tels algorithmes peuvent nécessiter une multitude d'acquisitions, par exemple en modifiant la position de la source de lumière par rapport à l'échantillon. Si les performances de reconstruction sont correctes, la complexité de mise en œuvre cantonne ces algorithmes à des utilisations en laboratoire et les rend difficilement applicables à des utilisations courantes. Un exemple d'un tel algorithme est par exemple décrit dans Denis L. et Al "Numerical suppression of the twin image in in-line holography of a volume of micro-objects", Meas .Sci. Technol. 19 (2008). Cette publication décrit un algorithme de suppression du bruit de reconstruction utilisant un masque binaire délimitant les objets reconstruits. Le masque peut être bidimensionnel ou tridimensionnel. Cette publication mentionne des algorithmes dits de "phase retrieval", permettant de recouvrer la phase d'une onde lumineuse.

La publication WO2015/015023 décrit un procédé de reconstruction holographique permettant également de réduire le bruit de reconstruction. Le procédé comporte l'acquisition, par un capteur d'image, de plusieurs images respectivement dans différentes longueurs d'onde. Chaque image est ensuite propagée. Le procédé comporte le calcul de la transformée de Fourier de chaque image propagée.

Le document US2012/0218379 décrit par exemple un procédé permettant de reconstruire une image complexe d'un échantillon, ladite image complexe comportant des informations d'amplitude et de phase. Une telle image permet d'obtenir certaines informations permettant, l'identification d'une cellule. Le document US2012/0148141 applique le procédé décrit dans le document US2012/0218379 pour reconstruire une image complexe de spermatozoïdes et de caractériser leur mobilité, leur orientation, ou certains paramètres géométriques, par exemple la taille de leur flagelle.

La publication Langehanenberg P. "Autofocusing in digital holographic microscopy", 3D Research, vol. 2 n° 1 march 2011, décrit un procédé de localisation de particules basé sur l'application d'un algorithme de focalisation numérique. Un tel algorithme, connu en soi, permet de déterminer la position de particules à partir d'une image acquise par un capteur d'image placé selon une configuration d'imagerie sans lentille. De multiples images sont reconstruites, par reconstruction holographique. Chaque particule est associée à une région d'intérêt et on calcule, sur chaque image reconstruite, un indicateur de netteté pour chaque région d'intérêt. Cet indicateur de netteté est désigné par le terme "focus value". On détermine ensuite une distance entre chaque particule et le capteur d'image : il s'agit de la distance pour laquelle l'indicateur de netteté prend une valeur minimale.

Les inventeurs ont cherché un procédé permettant la numération de particules dans un échantillon liquide, et plus particulièrement de leucocytes, permettant une observation fiable, pouvant être automatisable, et disposant d'un champ d'observation élevé. Contrairement à l'art antérieur, le procédé met en œuvre une image complexe non pas pour suivre la position d'une particule, mais pour la compter et l'identifier. De plus, le procédé est simple, aisément automatisable, et compatible avec une utilisation en routine.

La publication Ning Wu et al. "Three-dimensional identification of microorganisms using a digital holographic microscope", Computational and Mathematical Methods in Medicine, vol.2013, ID 162105, décrit une méthode d'analyse tridimensionnelle applicable aux images holographiques reconstruites numériquement à partir de microscopes holographiques. Cette méthode est appliquée au problème à deux classes consistant à distinguer différents types de bactéries.

## EXPOSE DE L'INVENTION

Un objet de l'invention est un procédé de détermination d'une quantité de particules d'intérêt contenues dans un échantillon, l'échantillon s'étendant selon un plan, dit plan de l'échantillon, le procédé comportant les étapes suivantes :

a) illumination de l'échantillon à l'aide d'une source de lumière, la source de lumière émettant une onde lumineuse incidente se propageant vers l'échantillon selon un axe de propagation;

b) acquisition, à l'aide d'un capteur d'image, d'une image de l'échantillon, formée dans un plan de détection, l'échantillon étant disposé entre la source de lumière et le capteur d'image, chaque image étant représentative d'une onde lumineuse, dite onde lumineuse d'exposition, à laquelle est exposé le capteur d'image sous l'effet de ladite illumination ;

le procédé étant caractérisé en ce qu'il comprend également les étapes suivantes :

c) à partir de l'image acquise lors de l'étape b), application d'un opérateur de propagation de façon à calculer une image complexe, dite image complexe de référence, représentative de l'échantillon, dans un plan de référence ;

d) détermination d'une position radiale de plusieurs particules dans un plan parallèle au plan de détection, chaque position radiale étant associée à une particule ;

e) calcul d'au moins une grandeur caractéristique de l'onde lumineuse d'exposition, à chaque position radiale déterminée lors de l'étape d), et à une pluralité de distances du plan de détection, dites distances de reconstruction;

f) formation d'un profil, représentant une évolution de la grandeur caractéristique calculée lors de l'étape e) en fonction de la distance de reconstruction, selon un axe parallèle à l'axe de propagation et passant par chaque position radiale déterminée lors de l'étape d), chaque profil étant associé à une particule ;

g) en fonction du profil formé lors de l'étape f), identification des particules d'intérêt;

h) détermination d'une quantité de particules d'intérêt dans l'échantillon à partir d'un nombre de particules d'intérêt identifiées lors de l'étape g).

Les particules d'intérêt peuvent par exemple être des cellules sanguines, par exemple des leucocytes et/ou des érythrocytes.

Le plan de référence peut être le plan de l'échantillon.

Selon un mode de réalisation, lors de l'étape e), la grandeur caractéristique comporte le module ou la phase d'une expression complexe de l'onde lumineuse d'exposition. Il peut s'agir du module, de la phase, ou d'une combinaison du module et de la phase, par exemple sous la forme d'un ratio.

Selon un mode de réalisation, l'étape d) comporte les sous-étapes suivantes :

d1) application d'un opérateur de propagation à l'image de référence, de façon à obtenir des images complexes, dites images complexes secondaires, à différentes distances du plan de référence, ou du plan de détection, selon l'axe de propagation, les images complexes secondaires et l'image complexe de référence formant une pile d'images complexes ;

d2) détermination d'une position radiale de particules à partir des images de la pile d'images complexes obtenue lors de la sous-étape d1).

Dans ce cas, la position radiale de chaque particule est obtenue en formant :

- une première image dont chaque point représente une valeur maximale, audit point et le long de l'axe de propagation, d'un module ou d'une phase des images de la pile d'images complexes;
- une deuxième image dont chaque point représente une valeur minimale, audit point et le long de l'axe de propagation, d'un module ou d'une phase des images de la pile d'images complexes;
- une image différentielle représentant une différence entre la première image et la deuxième image ;

la position radiale $(x_i, y_i)$ de chaque particule étant alors obtenue en appliquant un seuil à l'image différentielle.

L'étape d) peut être mise en œuvre à partir de l'image acquise par le capteur d'image lors de l'étape b), ou à partir de l'image complexe de référence calculée lors de l'étape c).

Selon un mode de réalisation, l'étape e) comporte les sous-étapes suivantes :

e1) application d'un opérateur de propagation à l'image de référence, de façon à obtenir des images complexes, dites images complexes secondaires, à différentes distances du plan de référence selon l'axe de propagation, les images complexes secondaires et l'image complexe de référence formant une pile d'images complexes ;

e2) détermination du module ou de la phase de l'onde à laquelle est exposé le capteur d'image à partir des images de la pile d'images complexes obtenue lors de la sous-étape e1).

L'étape g) peut comporter une classification d'un ou plusieurs profils associés à chaque particule. Cette classification peut comprendre l'application d'un seuillage à chaque profil, de telle sorte qu'un profil franchissant un seuil prédéterminé est considéré comme représentatif d'une particule d'intérêt. Le profil peut par exemple être un profil représentant l'évolution de la phase de l'onde lumineuse d'exposition, selon l'axe de propagation.

L'étape g) peut comprendre la détermination d'une distance de reconstruction, selon l'axe de propagation, d'une valeur maximale ou minimale d'un profil, de telle sorte qu'un profil pour lequel la valeur maximale ou minimale s'étend au-delà d'une distance seuil du plan de l'échantillon, ou du plan de détection, est considéré comme représentatif d'un leucocyte. Le profil peut être un profil représentant une évolution du module de l'onde lumineuse d'exposition, selon l'axe de propagation.

L'étape g) peut comprendre le calcul d'une surface s'étendant entre le profil et un segment de droite reliant un premier point remarquable et un deuxième point remarquable du profil. Le premier point remarquable du profil peut être un extremum du profil, par exemple le minimum. Le deuxième point remarquable peut être un point auquel le profil prend une valeur prédéterminée, à une distance de reconstruction supérieure à celle correspondant au premier point.

Selon un mode préféré de réalisation :

- l'étape a) comporte une illumination de l'échantillon selon deux bandes spectrales distinctes l'une de l'autre ;
- l'étape b) comporte une acquisition d'une image de l'échantillon dans chacune des deux bandes spectrales ;
- l'étape d) est mise en œuvre sur la base de l'image acquise, lors de l'étape b), dans la première bande spectrale ;
- l'étape e) est mise en œuvre sur la base de l'image acquise, lors de l'étape b), dans la deuxième bande spectrale.

La première bande spectrale peut être comprise entre 400 nm et 550 nm. La deuxième bande spectrale peut être comprise entre 500 nm et 600 nm.

Selon un mode de réalisation, le procédé comporte les étapes suivantes :

$g_{bis}$) classification de chaque particule, dont la position radiale a été identifiée lors de l'étape d), comme étant, ou non, un érythrocyte en fonction du profil formé lors de l'étape f);

$h_{bis}$) détermination d'une quantité d'érythrocytes dans l'échantillon en fonction des classifications réalisées lors de l'étape g) ;

et éventuellement :

i) détermination d'un ratio entre la quantité de leucocytes déterminée lors de l'étape h) et la quantité d'érythrocytes déterminée lors de l'étape $h_{bis}$).

De préférence, il n'y a pas d'optique de grossissement entre l'échantillon et le capteur d'image. Un autre objet de l'invention est un dispositif pour la numération de particules d'intérêt, par exemple des leucocytes, dans un échantillon, le dispositif comportant :

- une source de lumière apte à émettre une onde lumineuse incidente se propageant vers l'échantillon, selon un axe de propagation ;
- un support, configuré pour maintenir l'échantillon entre ladite source de lumière et un capteur d'image, le capteur d'image s'étendant selon un plan de détection ;

un processeur, configuré pour recevoir une image de l'échantillon acquise par le capteur d'image et à mettre en œuvre les étapes c) à h) du procédé tel que décrit dans cette description.

De préférence, aucune optique de grossissement n'est disposée entre l'échantillon et le capteur d'image lorsque l'échantillon est maintenu sur le support

D'autres avantages et caractéristiques ressortiront plus clairement de la description qui va suivre de modes particuliers de réalisation de l'invention, donnés à titre d'exemples non limitatifs, et représentés sur les figures listées ci-dessous.

**FIGURES**

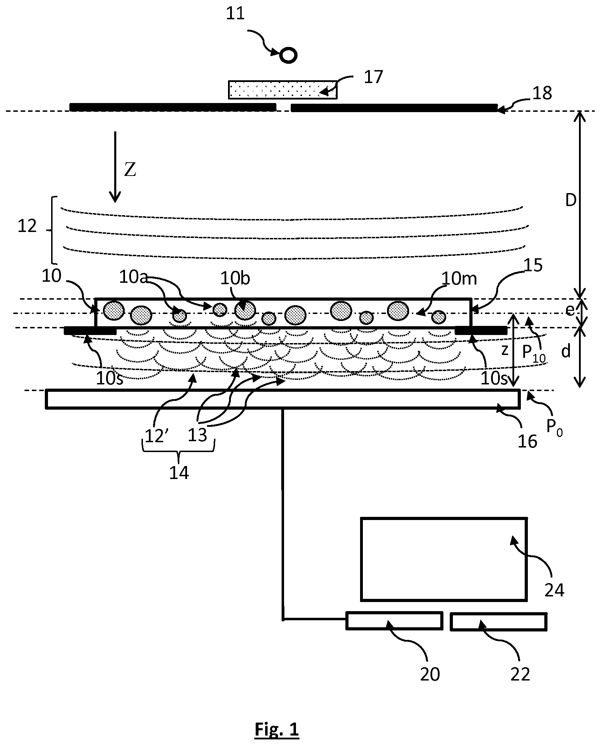

La figure 1 représente un exemple de dispositif permettant la mise en œuvre de l'invention.

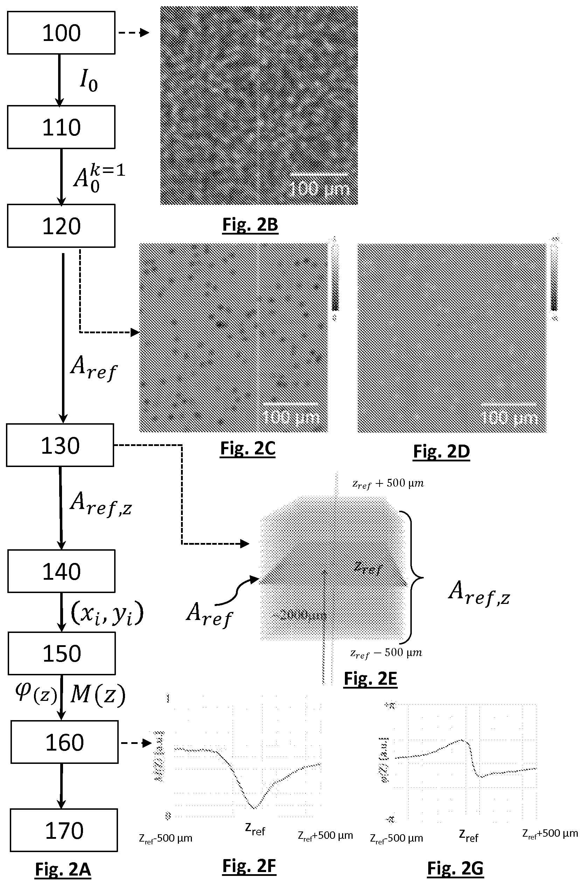

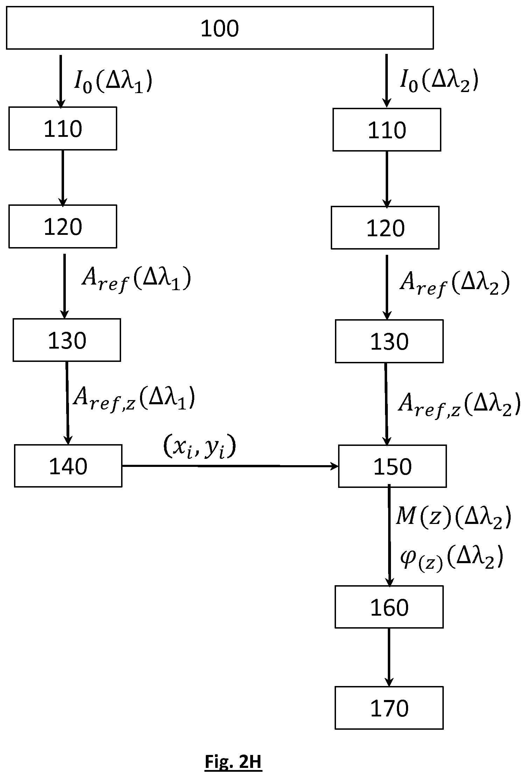

La figure 2A représente les principales étapes d'un procédé selon l'invention. Les figures 2B à 2G montrent les résultats de certaines étapes décrites en lien avec la figure 2A. La figure 2B montre une partie d'une image acquise par le capteur d'image. Les figures 2C et 2D représentent respectivement le module et la phase d'une image complexe, dite de référence, reconstruite sur la base de la figure 2A, dans un plan de référence. La figure 2E schématise une pile d'images obtenue par propagation de l'image complexe de référence dans différents plans parallèles les uns aux autres, de part et d'autre du plan de référence. Les figures 2F et 2G illustrent respectivement l'évolution du module et de la phase de l'onde à laquelle est exposé le capteur d'image, le module et la phase étant déterminés à partir des images de la pile d'images représentée sur la figure 2E. La figure 2H représente une variante préférée d'un procédé selon l'invention.

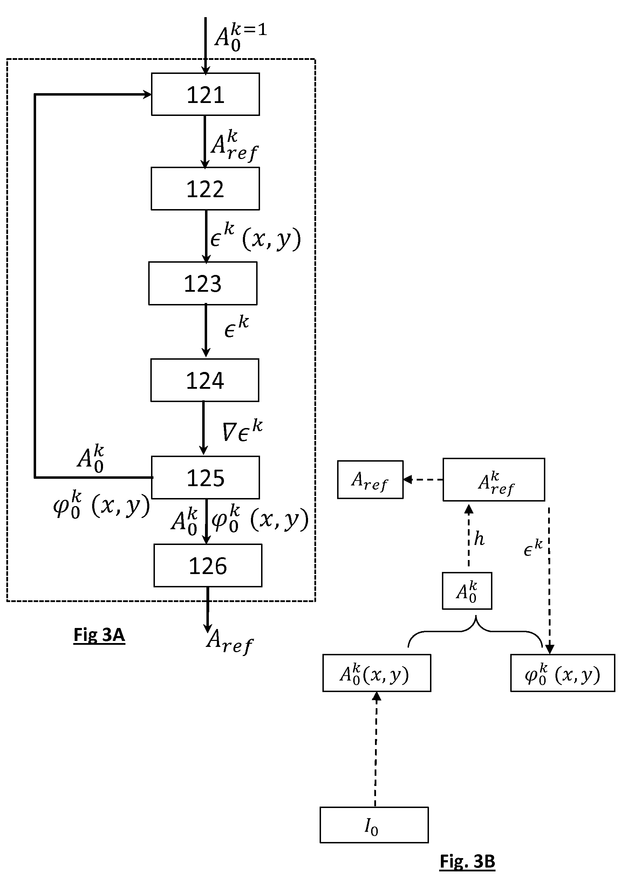

La figure 3A illustre les principales étapes d'un procédé permettant d'obtenir une image complexe de l'échantillon, dite image de référence, dans un plan de référence. La figure 3B schématise les étapes décrites en lien avec la figure 3A.

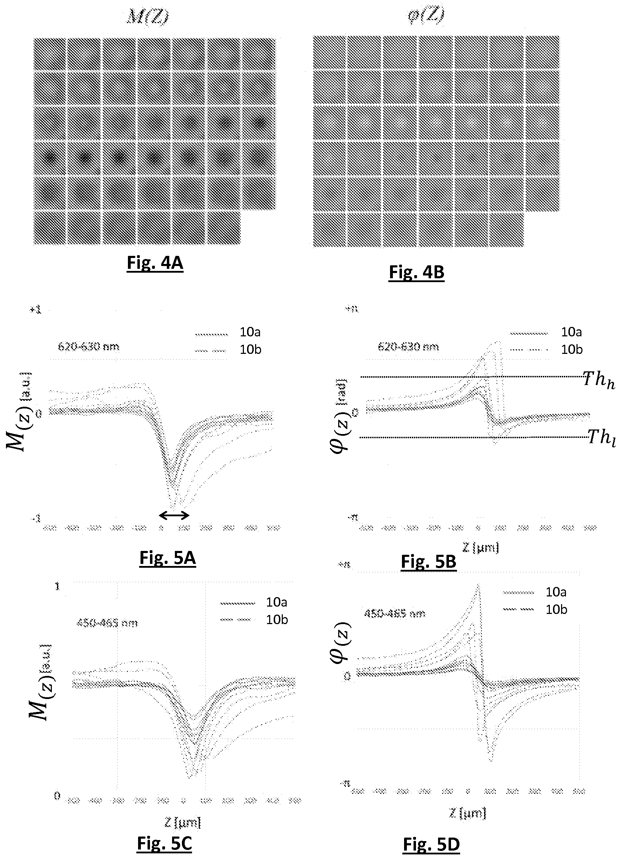

La figure 4A montre des vignettes représentant l'évolution d'une zone d'intérêt du module de chaque image de la pile représentée sur la figure 2E, selon l'axe de propagation de la lumière. La zone d'intérêt représentée sur chaque vignette correspond à une même particule. La figure 4B montre des vignettes représentant l'évolution, selon l'axe de propagation de la lumière, d'une zone d'intérêt de la phase de chaque image de la pile représentée sur la figure 2E.

Les figures 5A et 5B montrent respectivement des profils représentant l'évolution, selon une direction parallèle à l'axe de propagation de la lumière, du module et de la phase de l'onde lumineuse à laquelle est exposé le capteur d'image, la position radiale des profils étant centrée sur des particules, en l'occurrence des leucocytes ou des érythrocytes. Ces profils ont été réalisés en illuminant l'échantillon selon une bande spectrale rouge.

Les figures 5C et 5D montrent respectivement des profils représentant l'évolution, selon une direction parallèle à l'axe de propagation de la lumière, du module et de la phase de l'onde lumineuse à laquelle est exposé le capteur d'image, la position radiale des profils étant centrée sur des leucocytes ou sur des érythrocytes détectés. Ces profils ont été réalisés en illuminant l'échantillon selon une bande spectrale bleue.

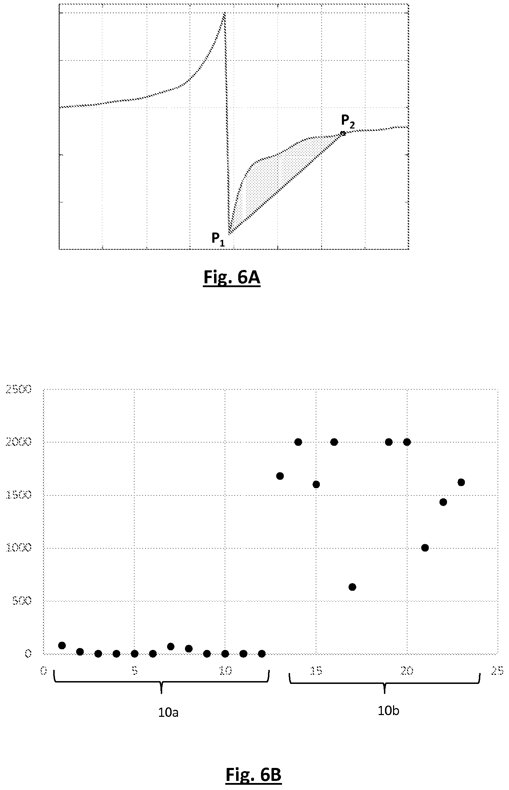

La figure 6A représente une aire calculée entre d'une part le profil et d'autre part un segment de droite reliant un point minimum du profil et un point du profil auquel le profil prend une valeur prédéterminée. L'aire représentée sur cette figure sert à classifier les particules en fonction de leur profil. La figure 6B représente la valeur d'une telle aire sur des profils correspondant à des érythrocytes et à des leucocytes.

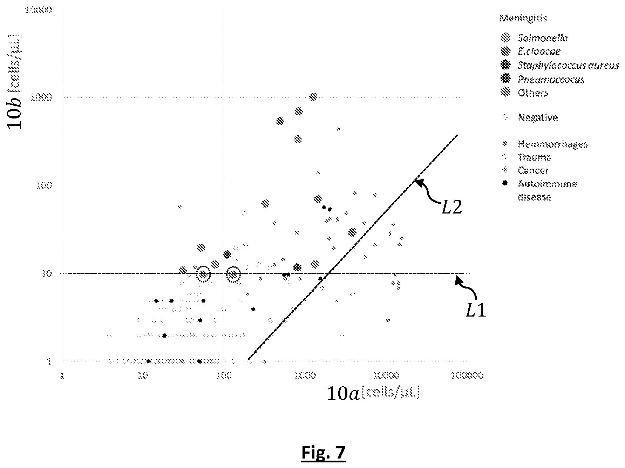

La figure 7 montre les résultats d'une numération de leucocytes et d'érythrocytes sur des échantillons de liquide céphalorachidien prélevés sur des patients humains présentant différentes pathologies.

**EXPOSE DE MODES DE REALISATION PARTICULIERS**

La figure 1 représente un exemple de dispositif selon l'invention. Une source de lumière 11 est apte à émettre une onde lumineuse 12, dite onde lumineuse incidente, se propageant en direction d'un échantillon 10, selon un axe de propagation Z. L'onde lumineuse est émise selon une bande spectrale $\Delta\lambda$.

L'échantillon 10 est un échantillon que l'on souhaite caractériser. Il comprend notamment un milieu 10m dans lequel baignent des particules 10a et 10b. Les particules 10a et 10b sont, dans cet exemple des cellules sanguines, notamment des globules rouges (érythrocytes) et des globules blancs (leucocytes) respectivement. Le milieu 10m, dans lequel baignent les particules, peut être un liquide corporel, et par exemple du liquide céphalo-rachidien (LCR), éventuellement dilué. L'échantillon peut comporter d'autres particules. Par particule, on entend par exemple une cellule, ou un de ses fragments, un microorganisme, une spore, ou une microbille.

L'échantillon 10 est, dans cet exemple, contenu dans une chambre fluidique 15. La chambre fluidique 15 est par exemple une chambre fluidique de type Countess $^\circledR$ d'épaisseur e=100 $\mu$m. L'épaisseur e de l'échantillon 10, selon l'axe de propagation, varie typiquement entre 10 $\mu$m et 1 cm, et est de préférence comprise entre 20 $\mu$m et 500 $\mu$m. L'échantillon s'étend selon un plan $P_{10}$, dit plan de l'échantillon, perpendiculaire à l'axe de propagation Z. Il est maintenu sur un support 10s à une distance d d'un capteur d'image 16.

La distance D entre la source de lumière 11 et l'échantillon 10 est de préférence supérieure à 1 cm. Elle est de préférence comprise entre 2 et 30 cm. Avantageusement, la source de lumière, vue par l'échantillon, est considérée comme ponctuelle. Cela signifie que son diamètre (ou sa diagonale) est préférentiellement inférieur au dixième, mieux au centième de la distance entre l'échantillon et la source de lumière. Sur la figure 1, la source de lumière est une diode électroluminescente. Elle est généralement associée à diaphragme 18, ou filtre spatial. L'ouverture du diaphragme est typiquement comprise entre 5 $\mu$m et 1 mm, de préférence entre 50 $\mu$m et 500 $\mu$m. Dans cet exemple, le diaphragme est fourni par Thorlabs sous la référence P150S et son diamètre est de 150 $\mu$m. Le diaphragme peut être remplacé par une fibre optique, dont une première extrémité est placée face à la source de lumière 11 et dont une deuxième extrémité est placée en regard de l'échantillon 10. Le dispositif représenté sur la figure 1 comporte également un diffuseur 17, disposé entre la source de lumière 11 et le diaphragme 18. L'usage d'un tel diffuseur permet de s'affranchir de contraintes de centrage de la source de lumière 11 par rapport à l'ouverture du diaphragme 18. La fonction d'un tel diffuseur est de répartir le faisceau lumineux, produit par une source de lumière élémentaire $11_i$, ($1{\leq}i{\leq}3$) selon un cône d'angle $\alpha$. De préférence, l'angle de diffusion $\alpha$ varie entre 10° et 80°. La présence d'un tel diffuseur est particulièrement utile lorsque la source de lumière comporte différentes sources de lumière élémentaires, comme décrit ci-après.

Alternativement, la source de lumière peut être une source laser, telle une diode laser. Dans ce cas, il n'est pas utile de lui associer un filtre spatial ou un diffuseur.

De préférence, la bande spectrale d'émission $\Delta\lambda$ de l'onde lumineuse incidente 12 a une largeur inférieure à 100 nm. Par largeur de bande spectrale, on entend une largeur à mi-hauteur de ladite bande spectrale.

Selon un mode de réalisation, la source de lumière 11 comporte plusieurs sources de lumière élémentaires $11_i$, chacune étant apte à émettre une onde lumineuse incidente $12_i$ dans une bande spectrale $\Delta\lambda_i$. De préférence, les bandes spectrales $\Delta\lambda_i$ des différentes sources de lumière $11_i$ sont différentes les unes des autres.

L'échantillon 10 est disposé entre la source de lumière 11 et le capteur d'image 16 précédemment évoqué. Ce dernier s'étend de préférence parallèlement, ou sensiblement parallèlement au plan $P_{10}$ selon lequel s'étend l'échantillon. Le terme sensiblement parallèlement signifie que les deux éléments peuvent ne pas être rigoureusement parallèles, une tolérance angulaire de quelques degrés, inférieure à 20° ou 10° étant admise.

Le capteur d'image 16 est apte à former une image $I_0$ selon un plan de détection $P_0$. Dans l'exemple représenté, il s'agit d'un capteur d'image comportant une matrice de pixels, de type CCD ou un CMOS. Le plan de détection $P_0$ s'étend de préférence perpendiculairement à l'axe de propagation Z de l'onde lumineuse incidente 12. La distance d entre l'échantillon 10 et la matrice de pixels du capteur d'image 16 est préférentiellement comprise entre 50 $\mu$m et 2 cm, de préférence comprise entre 100 $\mu$m et 2 mm.

On remarque l'absence d'optique de grossissement entre le capteur d'image 16 et l'échantillon 10. Cela n'empêche pas la présence éventuelle de microlentilles de focalisation au niveau de chaque pixel du capteur d'image 16, ces dernières n'ayant pas de fonction de grandissement de l'image acquise par le capteur d'image.

Selon l'invention, sous l'effet de l'onde lumineuse incidente 12, les particules présentes dans l'échantillon engendrent une onde diffractée 13, qui produit, au niveau du plan de détection $P_0$, des interférences, avec une partie de l'onde lumineuse incidente 12 transmise par l'échantillon. Par ailleurs, l'échantillon peut absorber une partie de l'onde lumineuse incidente 12. Ainsi, l'onde lumineuse 14, transmise par l'échantillon, et à laquelle est exposé le capteur d'image 20, désignée par le terme "onde d'exposition", peut comprendre :

- une composante 13 résultant de la diffraction de l'onde lumineuse incidente 12 par chaque particule de l'échantillon ;
- une composante 12' résultant de l'absorption de l'onde lumineuse incidente 12 par l'échantillon.

**EP 3 520 022 B1**

Ces composantes forment des interférences dans le plan de détection. Aussi, l'image acquise par le capteur d'image comporte des figures d'interférences (ou figures de diffraction), chaque figure d'interférence étant générée par une particule de l'échantillon.

Un processeur 20, par exemple un microprocesseur, est apte à traiter chaque image $I_0$ acquise par le capteur d'image 16. En particulier, le processeur est un microprocesseur relié à une mémoire programmable 22 dans laquelle est stockée une séquence d'instructions pour effectuer les opérations de traitement d'images et de calculs décrites dans cette description. Le processeur peut être couplé à un écran 24 permettant l'affichage d'images acquises par le capteur d'image 16 ou calculées par le processeur 20.

Une image $I_0$ acquise par le capteur d'image 16, également appelée hologramme, ne permet pas d'obtenir une représentation suffisamment précise de l'échantillon observé. Comme décrit en lien avec l'art antérieur, on peut appliquer, à chaque image acquise par le capteur d'image, un opérateur de propagation holographique h, de façon à calculer une grandeur représentative de l'onde lumineuse 14 transmise par l'échantillon 10, et à laquelle est exposé le capteur d'image 16. Un tel procédé, désigné par le terme reconstruction holographique, permet notamment de reconstruire une image du module ou de la phase de l'onde lumineuse d'exposition 14 dans un plan de reconstruction parallèle au plan de détection $P_0$, et notamment dans le plan $P_{10}$ selon lequel s'étend l'échantillon. Pour cela, on effectue un produit de convolution de l'image $I_0$ acquise par le capteur d'image 16 par un opérateur de propagation h. Il est alors possible de reconstruire une expression complexe A de l'onde lumineuse 14 en tout point de coordonnées (x, y, z) de l'espace, et en particulier dans un plan de reconstruction $P_z$ situé à une distance |z| du capteur d'image 16, dite distance de reconstruction, ce plan de reconstruction étant de préférence le plan de l'échantillon $P_{10}$, avec :

$A(x,y,z) = I_0(x,y,z) * h$ * désignant l'opérateur produit de convolution.

Dans la suite de cette description, les coordonnées (x,y) désignent une position radiale dans un plan perpendiculaire à l'axe de propagation Z. La coordonnée z désigne une coordonnée selon l'axe de propagation Z.

L'expression complexe $A$ est une grandeur complexe dont l'argument et le module sont respectivement représentatifs de la phase et de l'intensité de l'onde lumineuse 14 d'exposition le capteur d'image 16. Le produit de convolution de l'image $I_0$ par l'opérateur de propagation $h$ permet d'obtenir une image complexe $A_z$ représentant une distribution spatiale de l'expression complexe A dans un plan, dit plan de reconstruction $P_z$, s'étendant à une coordonnée $z$ du plan de détection $P_0$. Dans cet exemple, le plan de détection $P_0$ a pour équation $z = 0$. L'image complexe $A_z$ correspond à une image complexe de l'échantillon dans le plan de reconstruction $P_z$. Elle représente également une distribution spatiale bidimensionnelle des propriétés optiques de l'onde d'exposition 14.

L'opérateur de propagation $h$ a pour fonction de décrire la propagation de la lumière entre le capteur d'image 16 et un point de coordonnées (x, y, z), situé à une distance |z| du capteur d'image. Il est alors possible de déterminer le module $M(x,y,z)$ et/ou la phase $\varphi$ (x,y, z) l'onde lumineuse 14, à cette distance |z|, dite distance de reconstruction, avec :

-

$$M(x, y, z) = abs\,[A(x, y, z)]\ (1)\,;$$

-

$$\varphi(x, y, z) = arg\,[A(x, y, z)]\ (2)\,;$$

Les opérateurs *abs* et *arg* désignent respectivement le module et l'argument.

L'opérateur de propagation est par exemple la fonction de Fresnel-Helmholtz, telle que :

$$h(x, y, z) = \frac{1}{j\lambda z} e^{j2\pi\frac{z}{\lambda}} \exp(j\pi \frac{x^2+y^2}{\lambda z}).$$

Autrement dit, l'expression complexe A de l'onde lumineuse 14, en tout point de coordonnées (x,y, z) de l'espace, est telle que : $A(x,y, z) = M(x,y, z)e^{j\varphi(x,y,z)}$ (3). Il est possible de former des images $M_z$ et $\varphi_z$ représentant respectivement le module ou la phase de l'expression complexe A dans un plan $P_z$ situé à une distance |z| du plan de détection $P_0$, avec $M_z = $ mod ($A_z$) et $\varphi_z = $ arg($A_z$).

Les inventeurs ont mis au point un procédé de numération des leucocytes dans un échantillon, ce procédé étant décrit en lien avec les figures 2A à 2G. L'échantillon peut notamment être, ou comporter, du liquide céphalorachidien prélevé par ponction lombaire, la numération des leucocytes étant réalisée en vue d'un diagnostic de la méningite. En effet, comme décrit en lien avec l'art antérieur, une concentration, dépassant un certain seuil, de leucocytes dans le liquide céphalorachidien peut être une signature d'une méningite. Il est admis qu'une concentration de 10 leucocytes par microlitre constitue une concentration seuil au-delà de laquelle une méningite doit être suspectée. Les principales étapes du procédé de numération selon l'invention sont :

- l'acquisition, par le capteur d'image, d'une image $I_0$ de l'échantillon dans une ou plusieurs bandes spectrales ;
- la détermination de coordonnées radiales de particules détectées sur l'image acquise, le terme "radial" signifiant dans un plan parallèle au plan de détection ;
- à partir de l'image acquise, le calcul d'une grandeur caractéristique, par exemple le module ou la phase, de l'onde lumineuse d'exposition 14, à différentes distances de l'échantillon, dites distances de reconstruction ;
- la formation d'un profil représentant une évolution de la grandeur caractéristique en fonction de la distance de reconstruction, chaque profil étant associé à une particule ;
- à partir d'un ou plusieurs profil associé à chaque particule, l'identification de leucocytes en tant que particules d'intérêt ;
- le dénombrement des leucocytes ainsi identifiés, de façon à estimer une quantité de leucocytes dans l'échantillon.

La figure 2A représente un premier exemple de procédé mis en œuvre, dont les étapes sont décrites ci-dessous.

Etape 100 : Acquisition d'une image $I_0$ de l'échantillon 10 par le capteur d'image 16, cette image formant un hologramme. La figure 2B représente une partie d'une telle image. Un des intérêts de la configuration sans lentille, représentée sur la figure 1, est le large champ observé, permettant d'adresser simultanément un volume d'échantillon élevé. Cela permet d'observer simultanément plusieurs particules. Le champ observé dépend de la taille du capteur d'image, en étant légèrement inférieur à la surface de détection de ce dernier, du fait de l'espacement entre les pixels du capteur et l'échantillon. Le champ observé est généralement supérieur à 10 mm$^2$, et est typiquement compris entre 10 mm$^2$ et 50 mm$^2$, ce qui est significativement plus élevé qu'avec un microscope.

Etape 110 : Formation d'une image complexe dite initiale $A_0^{k=0}$ de l'échantillon 10 dans le plan de détection $P_0$. Au cours de cette étape, on définit une image initiale $A_0^{k=0}$ de l'échantillon 10, à partir de l'image $I_0$ acquise par le capteur d'image 16. Cette étape est une initialisation de l'algorithme itératif décrit ultérieurement en lien l'étape 120, l'exposant $k$ désignant le rang de chaque itération. Le module $a_0^{k=0}$ de l'image initiale $A_0^{k=0}$ peut-être obtenu en appliquant l'opérateur racine carrée à l'image $I_0$ acquise par le capteur d'image, auquel cas $a_0^{k=0} = \sqrt{I_0}$ . Dans cet exemple, on procède à une normalisation de l'image acquise $I_0$ par un terme représentatif de l'intensité de l'onde lumineuse 12 incidente à l'échantillon 10. Ce dernier peut être, par exemple, la racine carrée d'une moyenne $\bar{I_0}$ de l'image $I_0$, auquel cas chaque pixel $I_0(x, y)$ de l'image acquise est divisé par ladite moyenne, de telle sorte que $a_0^{k=0} = \sqrt{\dfrac{I_0(x,y)}{\bar{I_0}}}$ La phase $\varphi_0^{k=0}$ de l'image initiale $A_0^{k=0}$ est soit considérée comme nulle en chaque coordonnée radiale (x,y), soit prédéterminée selon une valeur arbitraire. En effet, l'image initiale $A_0^{k=0}$ résulte directement de l'image $I_0$ acquise par le capteur d'image 16. Or, cette dernière ne comporte pas d'information relative à la phase de l'onde lumineuse 14 transmise par l'échantillon 10, le capteur d'image 16 n'étant sensible qu'à l'intensité de cette onde lumineuse.

Etape 120 : Calcul d'une image complexe $A_{ref}$, dite de référence, de l'échantillon 10 dans un plan de référence $P_{ref}$, cette image de référence est une image complexe comportant des informations de phase et d'amplitude de l'onde lumineuse 14 à laquelle est exposé le capteur d'image 16. Le plan de référence est un plan avantageusement perpendiculaire à l'axe de propagation Z, et/ou parallèle au plan de détection $P_0$. Il s'agit de préférence du plan de l'échantillon $P_{10}$. L'étape 120 est effectuée en appliquant l'opérateur de propagation h, précédemment décrit, à l'image complexe initiale $A_0^{k=0}$. Cependant, l'application de l'opérateur de propagation à l'image complexe initiale peut aboutir à une image de référence $A_{ref}$ affectée d'un bruit de reconstruction important, fréquemment désigné par le terme "twin image". Afin d'obtenir une image complexe de référence exploitable, en limitant le bruit de reconstruction, des algorithmes itératifs peuvent être mis en œuvre. Un de ces algorithmes est décrit par la suite.

L'image complexe $A_{ref}$ est désignée comme étant une image de référence, car elle sert de base à la formation de profils sur la base duquel les particules de l'échantillon sont caractérisées. Les figures 2C et 2D montrent respectivement une image du module $M_{ref}$ et de la phase $\varphi_{ref}$ de l'image complexe de référence $A_{ref}$.

La coordonnée $z_{ref}$ du plan de référence $P_{ref}$ est déterminée soit a priori, notamment lorsque la position de l'échantillon est maîtrisée par rapport au capteur d'image 16, soit par le biais d'un autofocus, en se basant sur un critère de netteté de l'image de référence $A_{ref}$, cette dernière étant d'autant plus nette que le plan de référence correspond au plan dans lequel se trouvent les particules. Le critère de netteté peut être appliqué à l'image du module $M_{ref}$ ou de la phase de l'image $\varphi_{ref}$ de référence.

Etape 130 : Application d'un l'opérateur de propagation h à l'image complexe de référence $A_{ref}$ de façon à calculer des images complexes $A_{ref,z}$, dites secondaires, le long de l'axe de propagation Z . Au cours de cette étape, l'image complexe de référence $A_{ref}$ est propagée selon une pluralité de distances de reconstruction $z$, en utilisant un opérateur de propagation $h$ tel que précédemment défini, de façon à disposer d'une pluralité d'images complexes, dites secondaires, $A_{ref,z}$ reconstruites aux différentes distances $z$ du plan de référence $P_{ref}$. Ainsi, cette étape comprend la détermination d'une pluralité d'images complexes $A_{ref,z}$ telles que :

$$A_{ref,z} = A_{ref} * h_z \text{ avec } z_{min} \leq z \leq z_{max}.$$

Les valeurs $z_{min}$ et $z_{max}$ sont les coordonnées minimales et maximales, selon l'axe Z, entre lesquelles l'image complexe de référence est propagée. De préférence, les images complexes sont reconstruites selon une pluralité de coordonnées z entre l'échantillon 14 et le capteur d'image 16. Les inventeurs ont estimé qu'il était préférable d'obtenir des images complexes secondaires de part et d'autre du plan de référence $P_{ref}$, de telle sorte que $z_{min} \leq z_{ref} \leq z_{max}$.

Contrairement à l'image acquise $I_0$ par le capteur d'image 16, ou à l'image complexe initiale $A_0^{k=0}$, l'image complexe de référence décrit correctement l'onde lumineuse d'exposition 14, en particulier au niveau de sa phase. Par conséquent, on estime que les images secondaires $A_{ref,z}$, obtenues par propagation de l'image de référence, forment un bon descripteur de la propagation de l'onde lumineuse d'exposition 14 selon l'axe de propagation Z.

De préférence, deux plans de reconstructions adjacents sont espacés les uns des autres selon un maillage fin, compris par exemple entre 5 μm et 50 μm, et par exemple 25 μm. Il s'agit d'une propagation locale, car réalisée selon une distance comprise entre 250 μm et 2 μm de part et d'autre du plan de référence $P_{ref}$, par exemple à ± 500 μm. En se basant sur une reconstruction selon une distance de 500 μm de part et d'autre du plan de référence $P_{ref}$, et une distance entre deux plans adjacents de 25 μm, on propage l'image complexe de référence $A_{ref}$ selon quarante plans de reconstruction $P_{ref,z}$, de façon à former autant d'images complexes secondaires, $A_{ref,z}$. La figure 2E illustre une pile d'images, formée par l'image complexe de référence $A_{ref}$ ainsi que différentes images secondaires $A_{ref,z}$ obtenues par propagation locale de l'image complexe de référence $A_{ref}$. Cette pile d'images peut notamment permettre de détecter la présence de particules $i$ en chaque coordonnée radiale ($x_i$, $y_i$) (étape 140) et d'obtenir un profil représentatif du module et/ou de la phase de l'onde lumineuse 14 selon un axe de propagation passant par chaque particule détectée (étape 150).

Etape 140 : détection de particules dans l'échantillon. Cette étape vise à déterminer une position radiale ($x_i$, $y_i$) de chaque particule i à caractériser, soit en utilisant l'image complexe de référence $A_{ref}$, soit l'image $I_0$ acquise par le capteur d'image 16, soit en utilisant la pile d'images obtenue lors de l'étape 130, cette dernière option constituant le mode de réalisation préféré.

Pour cela, à chaque coordonnée radiale ($x$, $y$) du plan de référence, on détermine la valeur maximale ainsi que la valeur minimale du module dans la pile d'images complexes formées lors de l'étape 130. On forme ainsi une image du module maximum $M_{max}$, dont chaque coordonnée $M_{max}(x, y)$ rassemble les valeurs maximales du module, dans la pile d'images, à la coordonnée radiale (x,y). On forme également une image du module minimum $M_{min}$, dont chaque coordonnée $M_{min}(x, y)$ rassemble les valeurs minimales du module, dans la pile d'images, à la coordonnée radiale ($x$, $y$). A partir de l'image du module maximum et de l'image du module minimum, on établit une image différentielle du module $\Delta M$, avec $\Delta M(x, y) = M_{max}(x, y) - M_{min}(x, y)$. Chaque coordonnée radiale ($x_i$, $y_i$) correspond au centre d'une particule $i$ lorsque la valeur de l'image différentielle du module est supérieure à un certain seuil, c'est-à-dire $\Delta M(x_i, y_i) \geq M_{Th}$.

La figure 4A représente une série de vignettes, chaque vignette correspondant au module d'une image de la pile d'images, dans une région d'intérêt. Les vignettes représentent la même région d'intérêt, centrée sur une particule. On observe une variation significative de la valeur du module entre les différentes vignettes. Ainsi, en présence d'une particule $i$ à une coordonnée radiale ($x_i$, $y_i$), la valeur de l'image différentielle, à cette coordonnée, est élevée $\Delta M(x_i, y_i)$. Le seuillage précédemment décrit permet d'identifier les coordonnées radiales ($x_i$, $y_i$) correspondant à une particule, et en particulier désignant le centre de chaque particule.

En se basant sur la phase de chaque image de la pile d'images, on peut former de la même façon une image de la phase maximum $\varphi_{max}$ et une image de la phase minimum $\varphi_{min}$. On établit alors une image différentielle de la phase $\Delta\varphi$, avec $\Delta\varphi(x, y) = \varphi_{max}(x, y) - \varphi min(x, y)$. Chaque coordonnée radiale ($x_i$, $y_i$) correspond au centre d'une particule $i$ lorsque la valeur de l'image différentielle de la phase est supérieure à un certain seuil, c'est-à-dire $\Delta\varphi(x_i, y_i) \geq \varphi_{Th}$. La figure 4B représente une série de vignettes, chaque vignette représentant la phase d'une image de la pile d'images, dans une région d'intérêt correspondant à la même particule que sur la figure 4A. De la même manière que pour le module, on observe, en présence d'une particule, une variation significative de la valeur de la phase entre les différentes vignettes.

Ainsi la position radiale ($x_i$, $y_i$) de chaque particule est déterminée en retenant les points de l'image différentielle du module $\Delta M$ ou de l'image différentielle de la phase $\Delta\varphi$ dont les valeurs sont supérieures aux seuils prédéterminés. On peut également appliquer un critère de distance minimum entre deux positions radiales adjacentes, afin d'éviter que deux positions radiales trop rapprochées l'une de l'autre ne correspondent à une même particule. A l'issue de l'étape 140, on dispose de la position radiale ($x_i$, $y_i$) de chaque particule ainsi qu'un nombre de particules détectées.

Selon une variante, la détection de la position radiale ($x_i$, $y_i$) de chaque particule est effectuée en considérant une image de la pile d'images, qu'il s'agisse de l'image de référence $A_{ref}$ obtenue lors de l'étape 120 ou d'une image $A_{ref,z}$ de la pile d'images. Sur l'image du module ou de la phase de l'image considérée, chaque particule prend la forme d'une tache, comme on peut le voir sur les figures 2C et 2D. L'application de procédés de traitement d'image permet de déterminer les coordonnées du centroïde de chaque tache, ces dernières formant les différentes positions radiales $(x_i, y_i)$ à considérer.

Etape 150 : Formation d'un profil associé à chaque particule. A partir de l'image complexe de référence $A_{ref}$ et de chaque image complexe secondaire $A_{ref,z}$ on estime une grandeur caractéristique de l'onde lumineuse 14, à chaque position radiale $(x_i, y_i)$ préalablement sélectionnée lors de l'étape 140, et à une pluralité de distances $z$ de reconstruction du plan de référence $P_{ref}$ (ou du plan de détection $P_0$), puis on forme un profil représentant une évolution de la grandeur caractéristique en fonction de z, selon l'axe de propagation Z. La grandeur caractéristique peut notamment être établie à partir du module et de la phase de chaque particule. Les figures 2F et 2G représentent respectivement un profil du module M(z) et un profil de la phase $\varphi(z)$, à une même position radiale $(x_i, y_i)$, chaque profil étant obtenu à partir des images de la pile d'images formée lors de l'étape 130, en effectuant une interpolation entre les coordonnées de deux images adjacentes.

Etape160 : Identification de chaque particule à partir des profils formés au cours de l'étape 150. De préférence, on dispose d'une base de données de profils étalons formés au cours d'une phase d'apprentissage à l'aide d'échantillons étalons connus. L'identification est alors effectuée par une comparaison ou une classification du profil associé à chaque particule, en se basant sur des profils étalons. L'identification permet de déterminer si chaque particule correspond à une particule dite d'intérêt, que l'on souhaite dénombrer.

Etape 170 : Comptage. Les particules d'intérêt identifiées, au cours de l'étape précédente, sont dénombrées. Cela permet d'estimer une quantité (nombre ou concentration) de particules d'intérêt dans l'échantillon.

Les inventeurs ont constaté qu'il était préférable que l'étape 140 soit mise en œuvre en se basant sur une image de référence $A_{ref}(\Delta\lambda_1)$ reconstruite à partir d'une image $I_0(\Delta\lambda_1)$ acquise par le capteur d'image dans une première bande spectrale $(\Delta\lambda_1)$ comprise entre 400 nm et 550 nm, et de préférence entre 400 nm et 500 nm ce qui correspond aux longueurs d'onde bleues du spectre visible. Dans une telle bande spectrale, les particules se distinguent davantage du fond de l'image, qu'il s'agisse de l'image du module ou de l'image de phase, ce qui permet une meilleure détection des particules et une localisation plus précise. Cela permet une définition précise de chaque position radiale, en particulier lorsque les particules sont des leucocytes ou des érythrocytes. Ils ont également constaté que l'étape 150 peut donner de meilleurs résultats en se basant sur une image de référence $A_{ref}(\Delta\lambda_2)$ reconstruite à partir d'une image $I_0(\Delta\lambda_2)$ acquise par le détecteur dans une deuxième bande spectrale $(\Delta\lambda_2)$ entre 600 nm et 700 nm, ce qui correspond aux longueurs d'onde rouges du spectre visible.

Ainsi, selon un mode de réalisation préféré, l'étape 140 est effectuée en utilisant une image complexe de référence $A_{ref}(\Delta\lambda_1)$ calculée sur la base d'une image $I_0(\Delta\lambda_1)$ acquise par le capteur d'image dans une première bande spectrale $\Delta\lambda_1$ tandis que l'étape 150 est mise en œuvre en utilisant une image complexe de référence $A_{ref}(\Delta\lambda_2)$ calculée sur la base d'une image $I_0(\Delta\lambda_2)$ acquise par le capteur d'image dans une deuxième bande spectrale $\Delta\lambda_2$, différente de la première bande spectrale. Dans cet exemple, la première bande spectrale $\Delta\lambda_1$ est comprise entre 400 et 550 nm, et la deuxième bande spectrale $\Delta\lambda_2$ est comprise entre 600 nm et 700 nm. Cette combinaison de bandes spectrales s'est avérée particulièrement adaptée à l'observation de cellules sanguines de type leucocytes ou érythrocytes. Ce mode de réalisation est décrit en lien avec la figure 2H.

Un des points importants de cet algorithme est l'étape 120 de formation de l'image complexe de référence $A_{ref}$ à partir d'une l'image $I_0$ acquise par le capteur d'image 16. Cette image complexe est formée à partir d'un algorithme itératif, chaque itération comportant une propagation d'une image complexe représentative de l'échantillon du plan de détection $P_0$ vers le plan de référence, en l'occurrence le plan de l'échantillon $P_{10}$, puis une mise à jour de la valeur de la phase de chaque pixel de l'image complexe de l'échantillon 10 dans le plan de détection $P_0$. Plusieurs algorithmes sont potentiellement utilisables. Il est important que l'algorithme présente une bonne performance de reconstruction, l'image reconstruite présentant un bon rapport signal sur bruit, tout en étant simple à mettre en œuvre, sans nécessiter un nombre d'acquisitions trop important, et sans déplacer la source de lumière par rapport à l'échantillon.

Il est envisageable d'obtenir une image complexe de référence par une simple application de l'opérateur de propagation à l'image $I_0$ acquise par le capteur d'image. Cependant, cela donne lieu à une reconstruction affectée d'un bruit important, comme précédemment évoqué.

Selon une première possibilité, l'échantillon est illuminé successivement ou simultanément dans différentes bandes spectrales $\Delta\lambda$, et on acquiert, dans le plan de détection $P_0$, une image $I_0(\Delta\lambda)$ représentative de chaque bande spectrale. L'algorithme permet d'obtenir une image complexe $A_{ref}(\Delta\lambda)$ de l'échantillon 10, dans le plan de référence, dans chaque bande spectrale $\Delta\lambda$. Les images complexes ainsi obtenues peuvent être combinées, par exemple en effectuant une moyenne, en chaque pixel, de leur module et de leur phase, ce qui permet de former l'image de référence $A_{ref}$. Alternativement, l'image complexe de référence est une image complexe $A_{ref}(\Delta\lambda)$ dans une bande spectrale $\Delta\lambda$. Cet algorithme a été décrit dans la publication S. N. A. Morel, A. Delon, P. Blandin, T. Bordy, O. Cioni, L. Hervé, C. Fromentin, J. Dinten, and C. Allier, "Wide-Field Lensfree Imaging of Tissue Slides," in Advanced Microscopy Techniques IV; and Neurophotonics II, E. Beaurepaire, P. So, F. Pavone, and E. Hillman, eds., Vol. 9536 of SPIE Proceedings (Optical Society of America, 2015) ainsi que dans la demande de brevet FR1554811 déposée le 28 mai 2015, et plus précisément dans les étapes 100 à 500 décrites dans cette demande. On a montré que l'utilisation de deux ou trois bandes spectrales différentes permet d'obtenir une bonne performance de reconstruction.

Une autre possibilité préférée est de reconstruire une image complexe de référence en se basant sur une image acquise de l'échantillon lorsque ce dernier est illuminé dans une seule bande spectrale $\Delta\lambda$. L'image complexe de référence peut être obtenue en utilisant un algorithme tel que décrit dans la demande de brevet FR1652500 déposée le 23 mars 2016. Selon ce deuxième algorithme, les principales étapes de la formation de l'image complexe de référence sont décrites ci-après, en lien avec les figures 3A et 3B. Cet algorithme se base sur une seule acquisition, ce qui facilite sa mise en œuvre. Il s'agit d'un algorithme itératif, les étapes 120 à 125 décrites ci-dessous étant réitérées, k désignant le rang d'une itération.

Etape 121: propagation du plan de détection vers le plan de référence

Au cours de cette étape, on dispose d'une image formée dans le plan de détection $P_0$. Au cours de la première itération, il s'agit de l'image initiale $A_0^{k=0}$, décrite en lien avec l'étape 110. Lors des autres itérations, il s'agit de l'image $A_0^{k-1}$ résultant de l'itération précédente. L'image formée dans le plan de détection $P_0$ est propagée dans un plan de référence $P_{ref}$ par l'application d'un opérateur de propagation $h$ tel que précédemment décrit, de façon à obtenir une image complexe $A_{ref}^k$, représentative de l'échantillon 10, dans le plan de référence $P_{ref}$. La propagation est réalisée par convolution de l'image $A_0^{k-1}$ par l'opérateur de propagation $h_{-zref}$, de telle sorte que :

$$A_{ref}^k = A_0^{k-1} * h_{-zref},$$

L'indice -*zref* représente le fait que la propagation est réalisée dans un sens opposé à l'axe de propagation Z. On parle de rétropropagation.

Etape 122 : Calcul d'un indicateur en plusieurs pixels

Au cours de cette étape, on calcule une grandeur $\varepsilon^k(x, y)$ associée à chaque pixel d'une pluralité de pixels $(x, y)$ de l'image complexe $A_{ref}^k$, et de préférence en chacun de ses pixels. Cette grandeur dépend de la valeur $A_{ref}^k(x, y)$ de l'image $A_{ref}^k$, ou de son module, au pixel $(x, y)$ à laquelle elle est calculée. Elle peut également dépendre d'une dérivée dimensionnelle de l'image en ce pixel, par exemple le module d'une dérivée dimensionnelle de cette image. Dans cet exemple, la grandeur $\varepsilon^k(x, y)$ associée à chaque pixel est un module d'une différence de l'image $A_{ref}^k$, en chaque pixel, et la valeur 1. Une telle grandeur peut être obtenue selon l'expression :

$$\varepsilon^k(x,y) = \sqrt{\left(A_{ref}^k(x,y) - 1\right)\left(A_{ref}^k(x,y) - 1\right)^*} = \left|A_{ref}^k(x,y) - 1\right|$$

Etape 123 : établissement d'un indicateur de bruit associé à l'image $A_{ref}^k$.

Lors de l'étape 122, on calcule des grandeurs $\varepsilon^k(x, y)$ en plusieurs pixels de l'image complexe $A_z^k$. Ces grandeurs peuvent former un vecteur $\mathbf{E}^k$, dont les termes sont les grandeurs $\varepsilon^k(x, y)$ associées à chaque pixel $(x, y)$. Dans cette étape, on calcule un indicateur, dit indicateur de bruit, à partir d'une norme du vecteur $\mathbf{E}^k$. D'une façon générale, à une norme est associée un ordre, de telle sorte que la norme $\|\mathbf{x}\|_p$ d'ordre $p$ d'un vecteur $\mathbf{x}$ de dimension $n$ de coordonnées $(x_1, x_2, \dots x_n)$ est telle que : $\|\mathbf{x}\|_p = \left(\sum_{i=1}^{n} |x_i|^p\right)^{1/p}$, avec $p \geq 0$. Dans le cas présent, on utilise une norme d'ordre 1, autrement dit $p = 1$. Au cours de cette étape, la grandeur $\varepsilon^k(x, y)$ calculée à partir de l'image complexe $A_z^k$, à chaque pixel $(x, y)$ de cette dernière, est sommée de façon à constituer un indicateur de bruit $\varepsilon^k$ associé à l'image complexe $A_{ref}^k$.

Ainsi,

$$\varepsilon^k = \sum_{(x,y)} \varepsilon^k(x, y)$$

Un aspect important de cette étape consiste à déterminer, dans le plan de détection $P_0$, des valeurs de phase $\varphi_0^k(x, y)$ de chaque pixel de l'image $A_0^k$ dans le plan de l'échantillon, permettant d'obtenir, lors d'une itération suivante, une image reconstruite $A_{ref}^{k+1}$ dont l'indicateur de bruit $\varepsilon^{k+1}$ est inférieur à l'indicateur de bruit $\varepsilon^k$.

Lors de la première itération, on ne dispose que d'une information pertinente sur l'intensité de l'onde lumineuse 14, mais non sur sa phase. La première image reconstruite $A_{ref}^{k=1}$ dans le plan de reconstruction $P_{ref}$ est donc affectée d'un bruit de reconstruction important, du fait de l'absence d'information pertinente quant à la phase de l'onde lumineuse 14 dans le plan de détection $P_0$. Par conséquent, l'indicateur $\varepsilon^{k=1}$ est élevé. Au cours des itérations suivantes, l'algorithme procède à un ajustement progressif de la phase $\varphi_0^k(x, y)$ dans le plan de détection $P_0$, de façon à minimiser progressivement l'indicateur $\varepsilon^k$.

L'image $A_0^k$ dans le plan de détection est représentative de l'onde lumineuse 14 dans le plan de détection $P_0$, aussi bien du point de vue de son intensité que de sa phase. Les étapes 120 à 160 visent à établir, de façon itérative, la valeur de la phase $\varphi_0^k(x, y)$ de chaque pixel de l'image $A_0^k$, minimisant l'indicateur $\varepsilon^k$, ce dernier étant obtenu sur l'image $A_{ref}^k$ obtenue par propagation de l'image $A_0^{k-1}$ dans le plan de référence $P_{ref}$.

L'algorithme de minimisation peut être un algorithme de descente de gradient, ou de descente de gradient conjugué, ce dernier étant décrit ci-après.

Etape 124 : Ajustement de la valeur de la phase dans le plan de détection.

L'étape 124 vise à déterminer une valeur de la phase $\varphi_0^k(x, y)$ de chaque pixel de l'image complexe $A_0^k$ de façon à minimiser l'indicateur $\varepsilon^{k+1}$ résultant d'une propagation de l'image complexe $A_0^k$ dans le plan de référence $P_{ref}$ au cours de l'itération suivante $k+1$. Pour cela, un vecteur de phase $\boldsymbol{\varphi_0^k}$ est établi, dont chaque terme est la phase $\varphi_0^k(x, y)$ d'un pixel $(x, y)$ de l'image complexe $A_0^k$. La dimension de ce vecteur est ($N_{pix}$, 1), où $N_{pix}$ désigne le nombre de pixels considérés. Ce vecteur est mis à jour au cours de chaque itération, par l'expression de mise à jour suivante :

$$\varphi_0^k(x, y) = \varphi_0^{k-1}(x, y) + \alpha^k p^k(x, y)$$

où :

- $\alpha^k$ est un entier, désigné par le terme « pas », et représentant une distance ;
- $\boldsymbol{p^k}$ est un vecteur de direction, de dimension ($N_{pix}$, 1), dont chaque terme $p(x, y)$ forme une direction du gradient $\nabla \varepsilon^k$ de l'indicateur $\varepsilon^k$.

Cette équation peut être exprimée sous forme vectorielle, comme suit :

$$\boldsymbol{\varphi_0^k} = \boldsymbol{\varphi_0^{k-1}} + \alpha^k \boldsymbol{p^k}$$

On peut montrer que :

$$\boldsymbol{p^k} = -\boldsymbol{\nabla \varepsilon^k} + \beta^k \boldsymbol{p^{k-1}}$$

où :

- $\boldsymbol{\nabla \varepsilon^k}$ est un vecteur de gradient, de dimension ($N_{pix}$, 1), dont chaque terme représente une variation de l'indicateur $\varepsilon^k$ en fonction de chacun des degrés de liberté des inconnues du problème, c'est-à-dire les termes du vecteur $\boldsymbol{\varphi_0^k}$. ;
- $\boldsymbol{p^{k-1}}$ est un vecteur de direction établi lors de l'itération précédente ;
- $\beta^k$ est facteur d'échelle appliqué au vecteur de direction $\boldsymbol{p^{k-1}}$.

Chaque terme $\nabla \varepsilon^k(x, y)$ du vecteur de gradient $\nabla \varepsilon$, est tel que

$$\nabla \varepsilon^{k}(r') = \frac{\partial \varepsilon^{k}}{\partial \varphi_{0}^{k}(r')} = \text{Im}\left(A_{0}^{k^{*}}\right)(r') \cdot \left(\frac{\left(A_{ref}^{k}-1\right)}{\left|A_{ref}^{k}-1\right|} * h_{z}\right)(r')$$

où Im représente l'opérateur partie imaginaire et $r'$ représente une coordonnée ($x$, y) dans le plan de de détection.

Le facteur d'échelle $\beta^{k}$ peut être exprimé de telle sorte que :

$$\beta^{(k)} = \frac{\nabla \varepsilon^{(k)} . \nabla \varepsilon^{(k)}}{\nabla \varepsilon^{(k-1)} . \nabla \varepsilon^{(k-1)}}$$

Le pas $\alpha^{k}$ peut varier selon les itérations, par exemple entre 0.03 au cours des premières itérations et 0.0005 lors des dernières itérations.

L'équation de mise à jour permet d'obtenir un ajustement du vecteur $\boldsymbol{\varphi_{0}^{k}}$, ce qui entraîne une mise à jour itérative de la phase $\varphi_{0}^{k}(x, y)$ en chaque pixel de l'image complexe $A_{0}^{k}$. Cette image complexe $A_{0}^{k}$, dans le plan de détection, est alors mise à jour par ces nouvelles valeurs de la phase associée à chaque pixel.

Etape 125 : Réitération ou sortie d'algorithme.

Tant qu'un critère de convergence n'est pas atteint, l'étape 125 consiste à réitérer l'algorithme, par une nouvelle itération des étapes 121 à 125 sur la base de l'image complexe $A_{0}^{k}$ mise à jour lors de l'étape 124. Le critère de convergence peut être un nombre K prédéterminé d'itérations, ou une valeur minimale du gradient $\nabla \varepsilon^{k}$ de l'indicateur, ou une différence considérée comme négligeable entre deux vecteurs de phase $\boldsymbol{\varphi_{0}^{k-1}}, \boldsymbol{\varphi_{0}^{k}}$ consécutifs. Lorsque le critère de convergence est atteint, on dispose d'une estimation considérée comme correcte d'une image complexe de l'échantillon dans le plan de détection $P_{0}$ et/ou dans le plan de référence $P_{ref}$.

Etape 126 : Obtention de l'image complexe de référence.

A l'issue de la dernière itération, le procédé peut comprendre une propagation de l'image complexe $A_{0}^{k}$ résultant de la dernière itération dans le plan de référence $P_{ref}$, de manière à obtenir une image complexe de référence $A_{ref} = A_{ref}^{k}$. De façon alternative, l'image complexe de référence $A_{ref}$ est l'image complexe $A_{0}^{k}$ résultant de la dernière itération, dans le plan de détection $P_{0}$.

Selon un mode de réalisation, chaque profil est obtenu en propageant une image $I_{0}$ acquise par le capteur d'image à différentes distances de reconstruction z, ce qui donne lieu à autant d'images de référence $A_{ref}$ que de distances reconstruites. On obtient alors une pile d'images complexes de référence. Mais un tel mode de réalisation suppose une estimation précise de l'amplitude complexe de l'onde lumineuse d'exposition 14 aux différentes distances de reconstruction z. Les inventeurs ont estimé qu'il était préférable de reconstruire, de façon rigoureuse, une image de référence $A_{ref}$ dans un plan de référence $P_{ref}$. A partir de cette image complexe de référence $A_{ref}$, les profils sont obtenus en appliquant une simple propagation numérique, en considérant différentes distances de reconstruction, à l'image complexe de référence, de façon à obtenir les images complexes dites secondaires $A_{ref,z}$.

Essais expérimentaux.

Les figures 5A à 5D représentent des profils expérimentaux obtenus sur des leucocytes 10b et des érythrocytes 10a baignant dans du liquide céphalo-rachidien. Les conditions expérimentales sont les suivantes :

- échantillon 10 : liquide céphalorachidien contenu dans une chambre fluidique Countess®, le volume examiné atteignant 3 mm$^{3}$, soit 3 $\mu$l.
- source de lumière 11 : diode électroluminescente Cree MC-E Color, comportant trois diodes électroluminescentes pouvant être simultanément ou successivement activées, chaque diode émettant respectivement dans les bandes spectrales $\Delta\lambda$ suivantes : 450nm - 465 nm ; 520nm - 535 nm ; 620nm - 630 nm ;
- capteur d'image : Capteur CMOS monochrome 3840 x 2748 pixels, chaque pixel mesurant 1.67 $\mu$m de côté, la surface de détection s'étendant sur environ 30 mm$^{2}$;

- distance D entre la source de lumière 11 et l'échantillon 10 : 5 cm ;
- distance d entre l'échantillon 10 et le capteur d'image 16 : 2000 $\mu$m ;
- épaisseur e de la chambre fluidique 15 : 100 $\mu$m ;
- diamètre de l'ouverture du filtre spatial 18 : 150 $\mu$m ;

Le capteur étant monochrome, des images de l'échantillon sont acquises en activant une des diodes électroluminescentes composant la source de lumière 11, de façon à acquérir une image représentative de la bande spectrale $\Delta\lambda$ de la diode activée.

On a mis en œuvre le procédé décrit en lien avec la figure 2A, l'image complexe de référence étant obtenue comme décrit en lien avec les figures 3A et 3B.

Les figures 5A et 5B représentent respectivement des profils du module et de phase obtenus selon des génératrices parallèles à l'axe de propagation Z et passant par des leucocytes (10b) ou des érythrocytes (10a), l'échantillon étant éclairé dans la bande spectrale 620nm - 630 nm, ce qui correspond à une illumination dans le rouge. Dans cet exemple, comme représenté sur la figure 2E, le plan de référence $P_{ref}$ correspond au plan de l'échantillon $P_{10}$, situé à une distance de 2000 $\mu$m du plan de détection $P_0$. On remarque que la présence d'un érythrocyte se traduit par des variations de la phase et du module de part et d'autre du plan de l'échantillon, ce dernier correspondant à la coordonnée $z = 0$. Pour la plupart des particules, qu'il s'agisse d'un érythrocyte ou d'un leucocyte, le module prend une valeur minimale à une distance comprise entre 0 et 100 $\mu$m du plan de l'échantillon $P_{10}$. Toutefois, pour certains leucocytes, cette valeur minimale est atteinte à une distance supérieure à 100 $\mu$m par rapport au plan de l'échantillon.

Les figures 5C et 5D sont similaires aux figures 5A et 5B, l'échantillon étant éclairé dans la bande spectrale 450 nm - 465 nm, ce qui correspond au bleu. Comme précédemment indiqué, les inventeurs ont considéré qu'une illumination dans une bande spectrale rouge, typiquement comprise entre 500 nm et 600 nm, permet une meilleure discrimination entre les leucocytes et les érythrocytes.

Le profil du module ou de la phase de l'onde lumineuse d'exposition 14, selon l'axe de propagation Z, permet une identification des érythrocytes 10a et des leucocytes 10b, chaque particule présentant un profil type, à la fois au niveau de la phase que du module. Cette propriété a été appliquée à la numération de leucocytes 10b dans du liquide céphalorachidien à des fins d'aide au diagnostic de la méningite. Comme indiqué en lien avec l'art antérieur, il est connu qu'en présence d'une concentration de leucocytes supérieure à 10 cellules par $\mu$l, une méningite bactérienne doit être suspectée.

Les inventeurs ont analysé, avec le dispositif et la méthode précédemment décrits, 215 échantillons de liquide céphalorachidien prélevés, chaque échantillon étant prélevé sur une personne différente. Sur ces 215 échantillons :

- 15 correspondent à un cas de méningite ;
- 12 correspondent à des cas de cancer (glyome, médulloblastome ou carcinome) ;
- 25 correspondent à des hémorragies ;
- 13 correspondent à une maladie auto-immune ;
- 150 sont des échantillons négatifs, aucune pathologie particulière n'y étant associée, dont 17 présentant une concentration en érythrocyte particulièrement élevée, du fait d'un traumatisme survenu lors de la ponction lombaire.

Sur chaque échantillon, on a appliqué le procédé décrit en lien avec la figure 2H, l'image complexe de référence étant obtenue selon le procédé décrit en lien avec les figures 3A et 3B. L'échantillon a été éclairé selon la bande spectrale [450nm - 465 nm] pour déterminer la position radiale $(x_i, y_i)$ du centre de chaque cellule, puis selon la bande spectrale [620 nm - 630 nm] pour acquérir une image de l'échantillon sur la base de laquelle l'image complexe de référence est obtenue. A partir de l'image complexe de référence, on a obtenu des profils du module ou de la phase dans un intervalle spatial de 500 $\mu$m de part et d'autre du plan de l'échantillon. 40 images complexes ont été reconstruites, selon des coordonnées z espacées de 25 $\mu$m les unes des autres. A partir de ces images, les valeurs du profil et de la phase ont été obtenues à chaque hauteur de reconstruction puis interpolées de façon à disposer de profils continus.

On a tout d'abord appliqué un premier seuillage dit initial, de façon à ce que les profils ne franchissant pas un seuil initial, ne soient pas considérés par la suite. Cela permet d'exclure des particules non pertinentes, telles des poussières. La valeur du seuil initial peut être de 0.1 lorsque le profil est un profil de phase.

Afin de discriminer les leucocytes des érythrocytes, on a appliqué un seuil haut $Th_h$ et un seuil bas $Th_l$ aux profils représentant l'évolution de la phase. Ces seuils sont représentés sur la figure 5B. Les profils de phase de chaque particule ont été déterminés, et ceux franchissant le seuil haut $Th_h$ et/ou le seuil bas $Th_l$ ont été considérés comme représentatifs d'un leucocyte. La valeur du seuil haut et du seuil bas était respectivement +1.38 rad et -1.38 rad. Ainsi, une première identification des leucocytes a été basée sur la base d'un seuillage du profil de phase associé à chaque particule.

Une deuxième classification a été basée sur la position de la valeur minimale du module. Lorsque cette dernière est située à une distance supérieure à 100 $\mu$m par rapport au plan de l'échantillon $P_{10}$, la particule associée au profil est considérée comme étant un leucocyte. La distance de 100 $\mu$m est matérialisée par une double flèche sur la figure 5A.

Cette deuxième classification a été appliquée aux profils associés à des particules non considérées comme étant des leucocytes suite à la première classification.

Les classifications indiquées ci-dessus s'avèrent correctes, mais d'autres types de classifications, basées sur des profils obtenus à partir du module ou de la phase, ou combinant le module et la phase sont envisageables.

Une classification possible de profils est basée sur le calcul de l'aire d'une surface s'étendant entre le profil et une ligne reliant deux points remarquables du profil. Un premier point remarquable P1 est par exemple le point auquel le profil atteint sa valeur minimale. Un deuxième point remarquable P2 est un point auquel le profil prend une valeur prédéterminée à une distance de reconstruction z supérieure à celle pour laquelle la valeur minimale est obtenue. La figure 6A représente l'aire comprise entre un profil et une ligne s'étendant entre le premier point remarquable P1 et le deuxième point remarquable P2. La figure 6B montre des valeurs d'une telle aire pour des profils établis sur des érythrocytes 10a et sur des leucocytes 10b. Pour établir ces aires, on a considéré :

- pour le premier point remarquable P1, la valeur minimale de chaque profil,
- pour le deuxième point remarquable P2, le point atteignant un pourcentage de la valeur minimale du profil, à une distance de reconstruction z supérieure à celle correspondant au premier point remarquable P1.

On observe que l'aire calculée est nettement plus élevée sur les leucocytes que pour des érythrocytes. Une telle aire constitue une métrique fiable pour la classification des particules détectées.

Par ailleurs, l'identification de particules d'intérêt peut être obtenue en appliquant, au profil associé à chaque particule, des méthodes de classification classiques de type Analyse en Composants Principaux. Ces méthodes de classification s'appuient sur des profils types obtenus par des calibrations à l'aide d'échantillons de calibration comportant des particules connues.

La figure 7 représente les résultats expérimentaux obtenus en utilisant une classification des profils illustrée en lien avec les figures 5A et 5B. Les axes des abscisses et des ordonnées représentent respectivement les concentrations d'érythrocytes et de leucocytes déterminées dans chaque échantillon. La ligne horizontale $L1$, d'équation $y = 10$ représente la concentration seuil de 10 leucocytes par $\mu l$. Les cas avérés de méningite apparaissent sous la forme de disques gris, les autres cas apparaissant sous la forme de points (hémorragies, cancer, traumatismes, maladie auto-immune) ou de cercles (cas négatifs). Avec une telle identification, on a déterminé 57 cas positifs, incluant les 15 cas de méningite (vrais positifs) symbolisés par les disques, et 42 faux positifs. On remarque que cette classification ne génère pas de faux négatifs, ce qui traduit une sensibilité élevée. Dans la légende de cette figure, on a indiqué les bactéries à l'origine des méningites.

Le nombre de faux positifs peut être diminué en appliquant un autre seuil, basé sur un ratio entre les concentrations en leucocytes et en érythrocytes. Lorsque ce ratio dépasse un certain seuil, par exemple 1/200, on considère que l'échantillon est représentatif d'une hémorragie. Ce deuxième seuil est représenté, sur la figure 7, par la ligne $L2$ dont l'équation est $y = \dfrac{x}{200}$. La prise en compte de ce deuxième seuil permet d'éliminer 8 faux positifs, ce qui augmente la spécificité du procédé, sans impact sur sa sensibilité. Les deux lignes $L1$ et $L2$ délimitent un demi-espace, correspondant à une concentration en leucocytes et en érythrocytes pour lesquels une méningite peut être suspectée.

Au cours de cet essai, des échantillons ont été analysés selon une méthode classique, au microscope. 2 échantillons positifs, entourés par un pointillé sur la figure 7, n'ont pas été considérés comme positifs. Ces premiers essais tendent à montrer que la sensibilité de la méthode pourrait être supérieure à la mesure classique au microscope.

Le procédé décrit ci-dessus permet d'analyser simultanément, c'est-à-dire à partir d'une même image, plusieurs microlitres de liquide céphalorachidien, d'établir une concentration en leucocytes, voire en érythrocytes, et d'effectuer une analyse des échantillons présentant une bonne sensibilité vis-à-vis d'une pathologie, en l'occurrence la méningite, en vue d'un diagnostic. Il repose sur la mise en œuvre d'un équipement peu coûteux, simple et facile à mettre en œuvre. Il est notamment automatisable, ce qui permet d'envisager des analyses près du point de prélèvement, selon des dispositifs dits de "point of care". En outre, le procédé permet d'obtenir un résultat en quelques minutes.

Le procédé décrit ci-dessus pourrait être utilisé pour la détection de cellules comme aide au diagnostic d'autres pathologies. Le liquide corporel peut ainsi être de l'urine ou de la lymphe ou du sang, en particulier du sang dilué, du liquide synovial.

**Revendications**

1. Procédé de détermination d'une quantité de leucocytes (10b) contenus dans un échantillon (10), l'échantillon comportant des particules (10a, 10b) et s'étendant selon un plan, dit plan de l'échantillon ($P_{10}$), le procédé comportant les étapes suivantes :

a) illumination de l'échantillon à l'aide d'une source de lumière (11), la source de lumière émettant une onde lumineuse incidente (12) se propageant vers l'échantillon (10) selon un axe de propagation (Z) ;

b) acquisition, à l'aide d'un capteur d'image (16), d'une image ($I_0$) de l'échantillon (10), formée dans un plan de détection ($P_0$), l'échantillon étant disposé entre la source de lumière (11) et le capteur d'image (16), l'image étant représentative d'une onde lumineuse (14) dite d'exposition, à laquelle est exposé le capteur d'image (16) sous l'effet de l'illumination, l'image acquise étant un hologramme formé de figures d'interférence entre une partie de l'onde lumineuse incidente transmise par l'échantillon et une onde lumineuse (13) résultant de la diffraction de l'onde lumineuse incidente par l'échantillon;

le procédé étant **caractérisé en ce qu'**il comprend également les étapes suivantes :

c) à partir de l'image acquise ($I_0$) lors de l'étape b), application d'un opérateur de propagation (*h*), de façon à calculer une image complexe ($A_{ref}$), dite image de référence, représentative de l'échantillon, dans un plan de référence ($P_{ref}$) ;

d) détermination de positions radiales ($x_i$, $y_i$) de plusieurs particules dans un plan parallèle au plan de détection ($P_0$), chaque position radiale étant associée à une particule ;

e) calcul d'au moins une grandeur caractéristique ($M$, $\varphi$) de l'onde lumineuse d'exposition (14), à chaque position radiale ($x_i$, $y_i$), et à une pluralité de distances (*z*) du plan de détection ($P_0$);

f) formation d'un profil ($M(z)$, $\varphi(z)$), représentant une évolution de la grandeur caractéristique calculée lors de l'étape e) selon un axe parallèle à l'axe de propagation (Z) et passant par chaque position radiale ($x_i$, $y_i$) déterminée lors de l'étape d), chaque profil étant associé à une particule ;

g) en fonction de chaque profil formé lors de l'étape f), identification des leucocytes ;

h) détermination d'une quantité de leucocytes dans l'échantillon à partir d'un nombre de leucocytes identifiés lors de l'étape g).

2. Procédé selon la revendication 1, dans lequel lors de l'étape c), le plan de référence ($P_{ref}$) est le plan de l'échantillon ($P_{10}$).

3. Procédé selon l'une quelconque des revendications précédentes, dans lequel lors de l'étape e), la grandeur caractéristique comprend le module ($M$) ou la phase ($\varphi$) d'une expression complexe ($A$) de l'onde lumineuse d'exposition (14).

4. Procédé selon l'une quelconque des revendications précédentes, dans lequel l'étape d) comporte les sous-étapes suivantes :

d1) application d'un opérateur de propagation (*h*) à l'image de référence ($A_{ref}$), de façon à obtenir des images complexes, dites images complexes secondaires ($A_{ref,z}$), à différentes distances (*z*) du plan de référence ($P_{ref}$) selon l'axe de propagation (Z), les images complexes secondaires et l'image de référence formant une pile d'images complexes ;

d2) détermination d'une position radiale ($x_i$, $y_i$) de particules à partir des images de la pile d'images complexes obtenue lors de la sous-étape d1).

5. Procédé selon la revendication 4, dans laquelle la position radiale ($x_i$, $y_i$) de particules est obtenue en formant :

- une première image ($M_{max}$, $\varphi_{max}$) dont chaque point représente une valeur maximale, audit point et le long de l'axe de propagation (Z), d'un module ou d'une phase des images de la pile d'images complexes;

- une deuxième image ($M_{min}$, $\varphi_{min}$) dont chaque point représente une valeur minimale, audit point et le long de l'axe de propagation (Z), d'un module ou d'une phase des images de la pile d'images complexes;

- une image différentielle ($\Delta M$, $\Delta\varphi$) représentant une différence entre la première image et la deuxième image ;

la position radiale ($x_i$, $y_i$) de chaque particule étant obtenue en appliquant un seuil à l'image différentielle.

6. Procédé selon l'une quelconque des revendications précédentes, dans lequel l'étape e) comporte les sous-étapes suivantes :

e1) application d'un opérateur de propagation (*h*) à l'image de référence ($A_{ref}$), de façon à obtenir des images complexes, dites images complexes secondaires ($A_{ref,z}$), à différentes distances (*z*) du plan de référence ($P_{ref}$) selon l'axe de propagation (Z), les images complexes secondaires et l'image complexe de référence formant une pile d'images complexes ;
e2) détermination du module ou de la phase de l'onde lumineuse d'exposition (14) à laquelle est exposé le capteur d'image (16) à partir des images de la pile d'images complexes obtenue lors de la sous-étape e1).

**7.** Procédé selon l'une quelconque des revendications 1 à 5, dans lequel l'étape c) comporte l'application d'un opérateur de propagation ($h$) à l'image ($I_0$) acquise lors de l'étape b), à différentes distances de reconstruction ($z$), de façon à obtenir autant d'images de référence que de distances de reconstruction, et dans lequel lors de l'étape f), les profils sont obtenus à partir desdites images de référence.

**8.** Procédé selon l'une quelconque des revendications précédentes, dans lequel l'étape g) comporte l'application d'un seuillage à chaque profil ($M(z)$, $\varphi(z)$), un profil franchissant un seuil ($Th_h$, $Th_l$) prédéterminé étant considéré comme représentatif d'un leucocyte.

**9.** Procédé selon la revendication 8, dans lequel chaque profil représente l'évolution de la phase de l'onde lumineuse d'exposition (14), selon l'axe de propagation.

**10.** Procédé selon l'une quelconque des revendications précédentes, dans lequel l'étape g) comporte la détermination d'une position, selon l'axe de propagation (Z), d'une valeur maximale ou minimale de profils, de telle sorte qu'un profil pour lequel ladite valeur maximale ou minimale s'étend au-delà d'une distance seuil du plan de l'échantillon ($P_{10}$) est considéré comme représentatif d'un leucocyte.

**11.** Procédé selon l'une quelconque des revendications précédentes, dans lequel l'étape g) comporte :

- la sélection, sur le profil, d'un premier point remarquable (P1) et d'un deuxième point remarquable (P2) ;
- le calcul d'une aire s'étendant entre le profil et un segment de droite joignant les deux points remarquables.

**12.** Procédé selon la revendication 11, dans quel le premier point remarquable est le point auquel le profil prend une valeur minimale ou une valeur maximale, le deuxième point remarquable étant un point auquel le profil prend une valeur prédéterminée.

**13.** Procédé selon l'une quelconque des revendications précédentes, dans lequel :

- l'étape a) comporte une illumination de l'échantillon selon deux bandes spectrales ($\Delta\lambda_1$, $\Delta\lambda_2$) distinctes l'une de l'autre ;
- l'étape b) comporte une acquisition d'une image de l'échantillon ($I_0(\Delta\lambda_1)$, $I_0(\Delta\lambda_2)$) dans chacune des deux bandes spectrales ;
- l'étape d) est mise en œuvre sur la base de l'image acquise ($I_0(\Delta\lambda_1)$), lors de l'étape b), dans la première bande spectrale ($\Delta\lambda_1$);
- l'étape e) est mise en œuvre sur la base de l'image acquise ($I_0(\Delta\lambda_2)$), lors de l'étape b), dans la deuxième bande spectrale ($\Delta\lambda_2$).

**14.** Procédé selon la revendication 13, dans lequel la première bande spectrale ($\Delta\lambda_1$) est comprise entre 400 nm et 550 nm, et dans lequel la deuxième bande spectrale ($\Delta\lambda_2$) est comprise entre 500 nm et 600 nm.

**15.** Procédé selon l'une quelconque des revendications précédentes, comportant les étapes :

$g_{bis}$) classification de chaque particule, dont la position radiale a été identifiée lors de l'étape d), comme étant, ou non, un érythrocyte (10a) en fonction de chaque profil formé lors de l'étape f);
$h_{bis}$) détermination d'une quantité d'érythrocytes (10a) dans l'échantillon en fonction des classifications réalisées lors de l'étape $g_{bis}$) ;
i) détermination d'un ratio entre la quantité de leucocytes (10b) déterminée lors de l'étape h) et la quantité d'érythrocytes (10a) déterminée lors de l'étape $h_{bis}$).

**16.** Procédé selon l'une quelconque des revendications précédentes, dans lequel il n'y a pas d'optique de grossissement entre l'échantillon (10) et le capteur d'image (16).

**17.** Dispositif pour la numération de leucocytes (10b) contenus dans un échantillon (10), le dispositif comportant :

- une source de lumière (11) apte à émettre une onde lumineuse incidente (12) se propageant vers l'échantillon (10), selon un axe de propagation (Z) ;
- un capteur d'image (16), s'étendant selon un plan de détection ($P_0$);
- un support (10s), configuré pour maintenir l'échantillon (10) entre ladite source de lumière (11) et le capteur d'image (16);

un processeur (20), configuré pour recevoir une image de l'échantillon acquise par le capteur d'image (16) et à mettre en œuvre les étapes c) à h) du procédé objet de l'une quelconque des revendications 1 à 16.

**18.** Dispositif selon la revendication 17, dans lequel aucune optique de grossissement n'est disposée entre l'échantillon (10) et le capteur d'image (16) lorsque l'échantillon (10) est maintenu sur le support (10s).

**Patentansprüche**

**1.** Verfahren zur Bestimmung einer Menge an Leukozyten (10b), die in einer Probe (10) enthalten sind, wobei die Probe Partikel (10a, 10b) umfasst und sich entlang einer Ebene, der sogenannten Probenebene ($P_{10}$), erstreckt, wobei das Verfahren die folgenden Schritte umfasst:

a) Beleuchten der Probe mit einer Lichtquelle (11), wobei die Lichtquelle eine einfallende Lichtwelle (12) aussendet, die sich entlang einer Ausbreitungsachse (Z) zur Probe (10) ausbreitet;
b) Erfassung eines Bildes ($I_0$) der Probe (10) mit Hilfe eines Bildsensors (16), das in einer Detektionsebene ($P_0$) gebildet wird, wobei die Probe zwischen der Lichtquelle (11) und dem Bildsensor (16) angeordnet ist, wobei das Bild repräsentativ für eine sogenannte Belichtungslichtwelle (14) ist, der der Bildsensor (16) unter der Wirkung der Beleuchtung ausgesetzt ist, wobei das aufgenommene Bild ein Hologramm ist, das aus Interferenzmustern zwischen einem Teil der von der Probe durchgelassenen einfallenden Lichtwelle und einer Lichtwelle entsteht, die aus der Beugung der einfallenden Lichtwelle durch die Probe resultiert;

wobei das Verfahren **dadurch gekennzeichnet ist, dass** es auch die folgenden Schritte umfasst:

c) Ausgehend von dem in Schritt b) aufgenommenen Bild ($I_0$) wird ein Ausbreitungsoperator ($h$) angewendet, um ein komplexes Bild ($A_{ref}$), das sogenannte Referenzbild, , das für die Probe repräsentativ ist, in einer Referenzebene ($P_{ref}$) zu berechnen;
d) Bestimmung der radialen Positionen ($x_i, y_i$) mehrerer Partikel in einer zur Detektionsebene ($P_0$) parallelen Ebene, wobei jede radiale Position einem Partikel zugeordnet ist;
e) Berechnung mindestens einer charakteristischen Größe ($M, \varphi$) der Belichtungslichtwelle (14) an jeder radialen Position ($x_i, y_i$) und in einer Vielzahl von Abständen ($z$) von der Detektionsebene ($P_0$);
f) Bildung eines Profils(M(z), $\varphi$(z)), das eine Entwicklung der in Schritt e) berechneten charakteristischen Größe entlang einer zur Ausbreitungsachse (Z) parallelen Achse darstellt, die durch jede in Schritt d) bestimmte radiale Position ($x_i, y_i$) verläuft, wobei jedes Profil einem Partikel zugeordnet ist;
g) Identifizierung der Leukozyten anhand jedes in Schritt f) gebildeten Profils;
h) Bestimmung einer Leukozytenmenge in der Probe anhand einer Anzahl von Leukozyten, die in Schritt g) identifiziert wurden.

**2.** Verfahren nach Anspruch 1, wobei in Schritt c) die Referenzebene ($P_{ref}$) die Ebene der Probe ($P_{10}$) ist.

**3.** Verfahren nach einem der vorstehenden Ansprüche, wobei in Schritt e) die charakteristische Größe den Modul ($M$) oder die Phase ($\varphi$) eines komplexen Ausdrucks ($A$) der Belichtungslichtwelle (14) umfasst.

**4.** Verfahren nach einem der vorstehenden Ansprüche, wobei Schritt d) die folgenden Teilschritte umfasst:

d1) Anwenden eines Ausbreitungsoperators ($h$) auf das Referenzbild($A_{ref}$), um komplexe Bilder, sogenannte sekundäre komplexe Bilder($A_{ref,z}$), in verschiedenen Abständen ($z$) von der Referenzebene ($P_{ref}$) entlang der Ausbreitungsachse (Z) zu erhalten, wobei die sekundären komplexen Bilder und das Referenzbild einen Stapel komplexer Bilder bilden;
d2) Bestimmung einer radialen Position ($x_i, y_i$) von Partikeln anhand der Bilder des in Unterstufe d1) erhaltenen Stapels komplexer Bilder.

5. Verfahren nach Anspruch 4, wobei die radiale Position ($x_i$, $y_i$ ) von Partikeln durch Bilden folgender Bilder erhalten wird:

- ein erstes Bild($M_{max}\varphi_{max}$), bei dem jeder Punkt einen Maximalwert an diesem Punkt und entlang der Ausbreitungsachse (Z) eines Moduls oder einer Phase der Bilder des Stapels komplexer Bilder darstellt;
- ein zweites Bild($M_{min}$ ,$\varphi_{min}$), dessen jeder Punkt einen Minimalwert an diesem Punkt und entlang der Ausbreitungsachse (Z) eines Moduls oder einer Phase der Bilder des Stapels komplexer Bilder darstellt;
- ein Differentialbild ($\Delta M$ , $\Delta\varphi$), das eine Differenz zwischen dem ersten Bild und dem zweiten Bild darstellt;

wobei die radiale Position ($x_i$, $y_i$) jedes Partikels durch Anwenden eines Schwellenwerts auf das Differenzbild erhalten wird.

6. Verfahren nach einem der vorstehenden Ansprüche, wobei Schritt e) die folgenden Teilschritte umfasst:

e1) Anwendung eines Ausbreitungsoperators ($h$ ) auf das Referenzbild ($A_{ref}$), um komplexe Bilder, sogenannte sekundäre komplexe Bilder ($A_{ref,z}$), in verschiedenen Abständen (z) von der Referenzebene ($P_{ref}$ ) entlang der Ausbreitungsachse (Z) zu erhalten, wobei die sekundären komplexen Bilder und das komplexe Referenzbild einen Stapel komplexer Bilder bilden;
e2) Bestimmung des Moduls oder der Phase der Belichtungslichtwelle (14), der der Bildsensor (16) ausgesetzt ist, anhand der Bilder des in Unterstufe e1) erhaltenen Stapels komplexer Bilder.

7. Verfahren nach einem der Ansprüche 1 bis 5, wobei Schritt c) das Anwenden eines Ausbreitungsoperators (h) auf das in Schritt b) erfasste Bild ($I_0$) bei verschiedenen Rekonstruktionsabständen ($z$) umfasst, um so viele Referenzbilder wie Rekonstruktionsabstände zu erhalten, und wobei in Schritt f) die Profile aus den Referenzbildern erhalten werden.

8. Verfahren nach einem der vorstehenden Ansprüche, wobei Schritt g) das Anwenden einer Schwellenwertbildung auf jedes Profil ($M(z)$, $\varphi(z)$ ) umfasst, wobei ein Profil, das einen vorbestimmten Schwellenwert ($Th_h$, $Th_l$ ) überschreitet, als repräsentativ für ein Leukozyt angesehen wird.

9. Verfahren nach Anspruch 8, wobei jedes Profil die Entwicklung der Phase der Belichtungslichtwelle (14) entlang der Ausbreitungsachse darstellt.

10. Verfahren nach einem der vorstehenden Ansprüche, wobei der Schritt g) die Bestimmung einer Position entlang der Ausbreitungsachse (Z) eines Maximal- oder Minimalwerts von Profilen umfasst, so dass ein Profil, bei dem sich der genannte Maximal- oder Minimalwert über einen Schwellenabstand von der Probenebene ($P_{10}$ ) hinaus erstreckt, als repräsentativ für ein Leukozyt angesehen wird.

11. Verfahren nach einem der vorstehenden Ansprüche, wobei Schritt g) umfasst:

- die Auswahl eines ersten markanten Punktes (P1) und eines zweiten markanten Punktes (P2) auf dem Profil;
- die Berechnung einer Fläche, die sich zwischen dem Profil und einem Geradenabschnitt erstreckt, der die beiden markanten Punkte verbindet.

12. Verfahren nach Anspruch 11, wobei der erste markante Punkt der Punkt ist, an dem das Profil einen Minimalwert oder einen Maximalwert annimmt, und der zweite markante Punkt ein Punkt ist, an dem das Profil einen vorbestimmten Wert annimmt.

13. Verfahren nach einem der vorstehenden Ansprüche, wobei:

- Schritt a) umfasst eine Beleuchtung der Probe gemäß zwei voneinander getrennten Spektralbändern ($\Delta\lambda_1$, $\Delta\lambda_2$) ;
- Schritt b) umfasst die Erfassung eines Bildes der Probe ($I_0(\Delta\lambda_1)$, $I_0(\Delta\lambda_2)$) in jedem der beiden Spektralbänder;
- Schritt d) wird auf der Grundlage des in Schritt b) aufgenommenen Bildes ($I_0(\Delta\lambda_1)$) im ersten Spektralband($\Delta\lambda_1$) durchgeführt;
- Schritt e) wird auf der Grundlage des in Schritt b) erfassten Bildes ($I_0(\Delta\lambda_2)$) im zweiten Spektralband($\Delta\lambda_2$) durchgeführt.

14. Verfahren nach Anspruch 13, wobei das erste Spektralband ($\Delta\lambda_1$) zwischen 400 nm und 550 nm liegt und wobei das

zweite Spektralband ($\Delta\lambda_2$) zwischen 500 nm und 600 nm liegt.

15. Verfahren nach einem der vorstehenden Ansprüche, das die folgenden Schritte umfasst:

$g_{bis}$) Klassifizierung jedes Partikels, dessen radiale Position in Schritt d) identifiziert wurde, als Erythrozyt (10a) oder Nicht-Erythrozyt auf der Grundlage jedes in Schritt f) gebildeten Profils;
$h_{bis}$) Bestimmung einer Menge an Erythrozyten (10a) in der Probe in Abhängigkeit von den in Schritt $g_{bis}$) vorgenommenen Klassifizierungen;
i) Bestimmung eines Verhältnisses zwischen der in Schritt h) bestimmten Menge an Leukozyten (10b) und der in Schritt $h_{bis}$bestimmten Menge an Erythrozyten (10a) ).

16. Verfahren nach einem der vorstehenden Ansprüche, bei dem zwischen der Probe (10) und dem Bildsensor (16) keine Vergrößerungsoptik vorhanden ist.

17. Vorrichtung zum Zählen von in einer Probe (10) enthaltenen Leukozyten (10b), wobei die Vorrichtung umfasst: s

- eine Lichtquelle (11), die eine einfallende Lichtwelle (12) aussenden kann, die sich entlang einer Ausbreitungsachse (Z) zur Probe (10) ausbreitet;
- einen Bildsensor (16), der sich entlang einer Detektionsebene ($P_0$) erstreckt;
- einen Träger (10s), der so konfiguriert ist, dass er die Probe (10) zwischen der Lichtquelle (11) und dem Bildsensor (16) hält;

einen Prozessor (20), der so konfiguriert ist, dass er ein vom Bildsensor (16) aufgenommenes Bild der Probe empfängt und die Schritte c) bis h) des Verfahrens gemäß einem der Ansprüche 1 bis 16 ausführt.

18. Vorrichtung nach Anspruch 17, wobei keine Vergrößerungsoptik zwischen der Probe (10) und dem Bildsensor (16) angeordnet ist, wenn die Probe (10) auf dem Träger (10s) gehalten wird.

**Claims**

1. Method for determining the quantity of leukocytes (10b) contained in a sample (10), the sample comprising particles (10a, 10b) and extending along a plane, referred to as the sample plane ($P_{10}$), the method comprising the following steps:

a) illuminating the sample using a light source (11), the light source emitting an incident light wave (12) propagating towards the sample (10) along a propagation axis (Z);
b) acquisition, using an image sensor (16), of an image ($I_0$) of the sample (10), formed in a detection plane ($P_0$), the sample being disposed between the light source (11) and the image sensor (16), the image being representative of a light wave (14) known as the exposure wave, to which the image sensor (16) is exposed under the effect of illumination, the acquired image being a hologram formed from interference patterns between a portion of the incident light wave transmitted through the sample and a light wave resulting from the diffraction of the incident light wave by the sample;

the method being **characterised in that** it also comprises the following steps:

c) from the image acquired ($I_0$) in step b), applying a propagation operator ($h$) so as to calculate a complex image ($A_{ref}$), known as the reference image, representative of the sample, in a reference plane ($P_{ref}$);
d) determination of radial positions ($x_i$, $y_i$) of several particles in a plane parallel to the detection plane ($P_0$), each radial position being associated with a particle;
e) calculation of at least one characteristic quantity ($M, \varphi$) of the exposure light wave (14), at each radial position ($x_i$, $y_i$), and at a plurality of distances ($z$) from the detection plane ($P_0$);
f) formation of a profile($M(z), \varphi(z)$) representing a change in the characteristic quantity calculated in step e) along an axis parallel to the propagation axis (Z) and passing through each radial position ($x_i$, $y_i$) determined in step d), each profile being associated with a particle;
g) based on each profile formed in step f), identification of the leukocytes;
h) determination of a quantity of leukocytes in the sample based on a number of leukocytes identified in step g).

2. Method according to claim 1, wherein in step c), the reference plane ($P_{ref}$) is the plane of the sample ($P_{10}$).

3. Method according to any of the preceding claims, wherein in step e), the characteristic quantity comprises the modulus ($M$) or the phase ($\varphi$) of a complex expression ($A$) of the exposure light wave (14).

4. Method according to any of the preceding claims, wherein step d) comprises the following sub-steps:

   d1) applying a propagation operator ($h$) to the reference image ($A_{ref}$), so as to obtain complex images, known as secondary complex images($A_{ref,z}$), at different distances ($z$) from the reference plane ($P_{ref}$) along the propagation axis ($Z$), the secondary complex images and the reference image forming a stack of complex images;
   d2) determining a radial position ($x_i$, $y_i$) of particles from the images in the stack of complex images obtained in sub-step d1).

5. Method according to claim 4, wherein the radial position ($x_i$, $y_i$) of particles is obtained by forming:

   - a first image ($M_{max}, \varphi_{max}$) , each point of which represents a maximum value, at said point and along the propagation axis ($Z$), of a modulus or phase of the images in the stack of complex images;
   - a second image ($M_{min}, \varphi_{min}$), each point of which represents a minimum value, at said point and along the propagation axis ($Z$), of a modulus or phase of the images in the stack of complex images;
   - a differential image ($\Delta M$ , $\Delta\varphi$) representing a difference between the first image and the second image;

   the radial position ($x_i$, $y_i$) of each particle being obtained by applying a threshold to the differential image.

6. Method according to any of the preceding claims, wherein step e) comprises the following sub-steps:

   e1) applying a propagation operator ($h$) to the reference image($A_{ref}$), so as to obtain complex images, known as secondary complex images($A_{ref,z}$), at different distances ($z$) from the reference plane ($P_{ref}$) along the propagation axis ($Z$), the secondary complex images and the complex reference image forming a stack of complex images;
   e2) determining the modulus or phase of the exposure light wave (14) to which the image sensor (16) is exposed from the images in the stack of complex images obtained in sub-step e1).

7. Method according to any of claims 1 to 5, wherein step c) comprises applying a propagation operator ($h$) to the image ($I_0$) acquired in step b) at different reconstruction distances ($z$) so as to obtain as many reference images as there are reconstruction distances, and wherein in step f), the profiles are obtained from said reference images.

8. Method according to any of the preceding claims, wherein step g) comprises applying a threshold to each profile ($M(z)$, $\varphi(z)$), a profile crossing a predetermined threshold ($Th_h$, $Th_l$) being considered representative of a leukocyte.

9. Method according to claim 8, wherein each profile represents the evolution of the phase of the exposure light wave (14) along the axis of propagation.

10. Method according to any of the preceding claims, in which step g) comprises determining a position, along the propagation axis ($Z$), of a maximum or minimum value of profiles, such that a profile for which said maximum or minimum value extends beyond a threshold distance from the sample plane ($P_{10}$) is considered representative of a leukocyte.

11. Method according to any of the preceding claims, wherein step g) comprises:

    - selecting, on the profile, a first notable point (P1) and a second notable point (P2);
    - calculating an area extending between the profile and a straight line segment joining the two notable points.

12. Method according to claim 11, in which the first notable point is the point at which the profile takes a minimum or maximum value, the second notable point being a point at which the profile takes a predetermined value.

13. Method according to any of the preceding claims, wherein:

    - step a) comprises illuminating the sample according to two spectral bands ($\Delta\lambda_1$, $\Delta\lambda_2$)) that are distinct from each other;

- step b) comprises acquiring an image of the sample ($I_0(\Delta\lambda_1)$, $I_0(\Delta\lambda_2)$) in each of the two spectral bands;
- step d) is performed on the basis of the image acquired ($I_0(\Delta\lambda_1)$) in step b) in the first spectral band ($\Delta\lambda_1$) ;
- step e) is performed on the basis of the image acquired ($I_0(\Delta\lambda_2)$) in step b) in the second spectral band ($\Delta\lambda_2$) .

14. Method according to claim 13, wherein the first spectral band($\Delta\lambda_1$) is between 400 nm and 550 nm, and wherein the second spectral band($\Delta\lambda_2$) is between 500 nm and 600 nm.

15. Method according to any of the preceding claims, comprising the steps:

$g_{bis}$) classifying each particle, whose radial position was identified in step d), as being, or not being, an erythrocyte (10a) based on each profile formed in step f);
$h_{bis}$) determining a quantity of erythrocytes (10a) in the sample based on the classifications made in step $g_{bis}$);
i) determining a ratio between the quantity of leukocytes (10b) determined in step h) and the quantity of erythrocytes (10a) determined in step $h_{bis}$).

16. Method according to any of the preceding claims, in which there is no magnifying optics between the sample (10) and the image sensor (16).

17. A Device for counting leukocytes (10b) contained in a sample (10), the device comprising: s

- a light source (11) capable of emitting an incident light wave (12) propagating towards the sample (10) along a propagation axis (Z);
- an image sensor (16) extending along a detection plane ($P_0$ );
- a support (10s) configured to hold the sample (10) between said light source (11) and the image sensor (16);

a processor (20) configured to receive an image of the sample acquired by the image sensor (16) and to implement steps c) to h) of the method according to any of claims 1 to 16.

18. Device according to claim 17, wherein no magnifying optics are arranged between the sample (10) and the image sensor (16) when the sample (10) is held on the holder (10s).

**Fig. 1**

**Fig. 2B**

**Fig. 2C**

**Fig. 2D**

**Fig. 2E**

**Fig. 2A**

**Fig. 2F**

**Fig. 2G**

**Fig. 2H**

$A_0^{k=1}$

121

$A_{ref}^k$

122

$\epsilon^k(x,y)$

123

$\epsilon^k$

124

$\nabla\epsilon^k$

$A_0^k$

125

$\varphi_0^k(x,y)$

$A_0^k$ $\varphi_0^k(x,y)$

126

**Fig 3A**

$A_{ref}$

$A_{ref}$ ← $A_{ref}^k$

$\epsilon^k$

$h$

$A_0^k$

$A_0^k(x,y)$ $\varphi_0^k(x,y)$

$I_0$

**Fig. 3B**

$M(Z)$

$\varphi(Z)$

**Fig. 4A**

**Fig. 4B**

**Fig. 5A**

**Fig. 5B**

**Fig. 5C**

**Fig. 5D**

**Fig. 6A**

**Fig. 6B**

**Fig. 7**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008090330 A
- US 20140327944 A
- WO 2015015023 A
- US 20120218379 A
- US 20120148141 A
- FR 1554811
- FR 1652500

**Littérature non-brevet citée dans la description**

- **RYLE et al.** Digital in-line holography of biological specimens. *Proc. Of SPIE*, 2006, vol. 6311
- **DENIS L.** Numerical suppression of the twin image in in-line holography of a volume of micro-objects. *Meas .Sci. Technol.*, 2008, vol. 19
- **LANGEHANENBERG P**. Autofocusing in digital holographic microscopy. *3D Research*, March 2011, vol. 2 (1)
- **NING WU et al.** Three-dimensional identification of microorganisms using a digital holographic microscope. *Computational and Mathematical Methods in Medicine*, vol. 2013
- Wide-Field Lensfree Imaging of Tissue Slides. **S. N. A. MOREL** ; **A. DELON** ; **P. BLANDIN** ; **T. BORDY** ; **O. CIONI** ; **L. HERVÉ** ; **C. FROMENTIN** ; **J. DINTEN** ; **C. ALLIER**. Advanced Microscopy Techniques IV; and Neurophotonics II. Optical Society of America, 2015, vol. 9536